# EUROPEAN PATENT SPECIFICATION

(11) **EP 2 190 784 B1**
(45) Date of publication and mention of the grant of the patent: **12.06.2019**
(21) Application number: 08808021.3
(22) Date of filing: 10.09.2008
(51) Int. Cl.: C01G 39/00, C01G 41/00, B82Y 30/00, C01G 39/06

(54) **FULLERENE-LIKE NANOSTRUCTURES, THEIR USE AND PROCESS FOR THEIR PRODUCTION**
FULLEREN-ÄHNLICHE NANOSTRUKTUREN, IHRE VERWENDUNG UND VERFAHREN ZU IHRER HERSTELLUNG
NANOSTRUCTURES DE TYPE FULLERÈNE, LEUR UTILISATION ET LEUR PROCÉDÉ DE PRODUCTION

(30) Priority: 10.09.2007 US 971057 P
(43) Date of publication of application: 02.06.2010
(73) Proprietor: Yeda Research And Development Company Ltd., 76100 Rehovot (IL)
(72) Inventor: TENNE, Reshef, 76231 Rehovot (IL); DEEPAK, Francis Leonard, 7610002 Rehovot (IL); COHEN, Hagai, 7610002 Rehovot (IL); COHEN, Sidney R., 7610002 Rehovot (IL)
(74) Representative: Pearl Cohen Zedek Latzer Baratz UK LLP
(86) International application number: PCT/IL2008/001213
(87) International publication number: WO 2009/034572

(56) References cited:
- DEEPAK F L ET AL: "Fullerene-like (IF) NbxMO1-xS2 nanoparticles" JOURNAL OF THE AMERICAN CHEMICAL SOCIETY 20071017 AMERICAN CHEMICAL SOCIETY US, vol. 129, no. 41, 17 October 2007 (2007-10-17), pages 12549-12562, XP002511326
- ZHU Y Q ET AL: "Nb-doped WS2 nanotubes" CHEMICAL PHYSICS LETTERS ELSEVIER NETHERLANDS, vol. 342, no. 1-2, 6 July 2001 (2001-07-06), pages 15-21, XP002511327 ISSN: 0009-2614
- DEEPAK ET AL: "MOS2 FULLERENE-LIKE NANOPARTICLES AND NANOTUBES USING GAS-PHASE REACTION WITH MOCL5" NANO, vol. 1, September 2006 (2006-09), pages 167-180, XP002511329
- SCHUFFENHAUER C ET AL: "Synthesis of NbS2 nanoparticles with (nested) fullerene-like structure (IF)" JOURNAL OF MATERIALS CHEMISTRY, THE ROYAL SOCIETY OF CHEMISTRY, CAMBRIDGE, GB, vol. 12, 1 January 2002 (2002-01-01), pages 1587-1591, XP003007412 ISSN: 0959-9428 cited in the application
- TENNE R: "Doping control for nanotubes" NATURE 20041007 NATURE PUBLISHING GROUP GB, vol. 431, no. 7009, 7 October 2004 (2004-10-07), pages 640-641, XP002511328
- ZAK A ET AL: "Alkali metal intercalated fullerene-like MS2 (M = W, Mo) nanoparticles and their properties", JOURNAL OF THE AMERICAN CHEMICAL SOCIETY 20020501 AMERICAN CHEMICAL SOCIETY US, vol. 124, no. 17, 1 May 2002 (2002-05-01), pages 4747-4758,

## Description

### FIELD OF THE INVENTION

This invention relates to fullerene-like nanoparticles, and a method of manufacturing such particles.

### BACKGROUND OF THE INVENTION

The following references are considered to be pertinent for the purpose of understanding the background of the present invention:
(1) Tenne, R. Nature Nanotech. 2006, 1, 103.
(2) Tenne, R., Margulis, L., Genut M. & Hodes, G. Nature 1992, 360, 444.
(3) Feldman, Y., Wasserman, E., Srolovitz D. J. & Tenne R. Science 1995, 267, 222.
(4)
   (a) Deepak, F. L.; Margolin, A.; Wiesel, I.; Bar-Sadan, M.; Popovitz-Biro, R.; Tenne, R. Nano 2006, 1, 167.
   (b) Etzkorn, J.; Therese, H. A.; Rocker, F.; Zink, N.; Kolb, Ute.; Tremel, W. Adv. Mater. 2005, 17, 2372.
(5) Zak, A.; Feldman, Y.; Lyakhovitskaya, V.; Leitus, G.; Popovitz-Biro, R.; Wachtel, E.; Cohen, H.; Reich, S.; Tenne, R. J. Am. Chem. Soc. 2002, 124, 4747.
(6) Ivanovskaya, V. V.; Heine, T.; Gemming S.; Seifert, G. Phys. Stat. Sol. B: Basic Solid State Physics 2006, 243, 1757.
(7) Schuffenhauer, C.; Popovitz-Biro R.; Tenne, R. J. Mater. Chem. 2002, 12, 1587.
(8) Schuffenhauer, C.; Parkinson, B. A.; Jin-Phillipp, N.Y.; Joly-Pottuz, L.; Martin, J. -M.; Popovitz-Biro R.; Tenne, R. Small 2005, 1, 1100.
(9) Margolin, A.; Popovitz-Biro, R.; Albu-Yaron, A.; Rapoport L.; Tenne, R. Chem. Phys. Lett. 2005, 411, 162.
(10) Seifert, G.; Köhller, T.; Tenne, R. J. Phys. Chem. B. 2002, 106, 2497.
(11) Scheffer, L.; Rosentzveig, R.; Margolin, A.; Popovitz-Biro, R.; Seifert, G.; Cohen, S. R.; Tenne, R. Phys. Chem. Chem. Phys. 2002, 4, 2095.
(12) Yang, D.; Frindt, R. F. Mol. Liq. Cryst., 1994, 244, 355;
(13)
   (a) Zhu, Y.Q.; Hsu, W. K.; Terrones, M.; Firth, S.; Grobert, N.; Clark, R. J. H.; Kroto H. W.; Walton, D. R. M. Chem. Commun. 2001, 121;
   (b) Hsu, W. K.; Zhu, Y.Q.; Yao, N.; Firth, S.; Clark, R. J. H.; Kroto H. W.; Walton, D. R. M. Adv. Funct. Mater. 2001, 11, 69;
   (c) Nath, M.; Mukhopadhyay, K.; Rao, C. N. R. Chem. Phys. Lett. 2002, 352, 163;
(14) K. S. Coleman, J. Sloan, N. A. Hanson, G. Brown, G. P. Clancy, M. Terrones, H. Terrones and M. L. H. Green, J. Am. Chem. Soc. 2002, 124, 11580.
(15) M. Brorson, T. W. Hansen, and C. J. H. Jacobsen, J. Am. Chem. Soc. 2002, 124, 11582.
(16) K. K Tiong, T. S. Shou and C. H. Ho, J. Phys. Condens. Matter. 2000, 12, 3441.
(17) K. Biswas, C.N.R. Rao J. phys. Chem. B 2006 110, 842.

MoS₂ and WS₂ are quasi two dimensional (2D) compounds. Atoms within a layer are bound by strong covalent forces, while individual layers are held together by van der Waals (vdW) interactions. The stacking sequence of the layers can lead to the formation of a hexagonal polymorph with two layers in the unit cell (2H), rhombohedral with three layers (3R), or trigonal with one layer (IT). The weak interlayer vdW interactions offer the possibility of introducing foreign atoms or molecules between the layers via intercalation. Furthermore, MoS₂, WS₂ and a plethora of other 2D compounds are known to form closed cage structures which are referred to as inorganic fullerene-like (IF) and inorganic nanotubes (INT), analogous to structures formed from carbon [1]. One of the initial methods of synthesis of IF-MoS₂ and IF-WS₂ involved starting from the respective oxide nanoparticles [2, 3]. Subsequently synthesis of IF-NbS₂ and IF-MoS₂ using a gas-phase reaction starting from MoCl₅ and NbCl₅, respectively, and H₂S has been demonstrated [4a, 7]. A similar strategy for the synthesis of IF-MoS₂ nanoparticles using the gas phase reaction between Mo(CO)₆ and sulfur, has been reported [4b]. The two kinds of reactions progress along very different paths, which has a large effect on the topology of the closed-cage nanoparticles. The conversion of the metal-oxide nanoparticles to sulfides (IF) starts on the surface of the nanoparticles progressing gradually inwards in a slow diffusion-controlled fashion. Contrarily, the gas-phase reaction proceeds by a nucleation and growth mode starting from, e.g. a small MoS₂ nuclei and progressing outwards rather rapidly.

Modification of the electronic properties of layered-type semiconductors can be accomplished either by intercalation of foreign atoms in the host lattice, or by doping/alloying process of the semiconductor. In the intercalation process alkali or another moiety like amine diffuses into the van der Waals gap between each two layers. Once it resides in the proper site it donates its valence electron to the host lattice making it n-type conductor. In the case of doping and alloying the metal atoms go into the layer itself substituting the host transition metal atom. If the substituting atom (e.g. Nb) has one less electron in its outer shell than the host metal atom (Mo), the lattice becomes p-doped. If the substituting metal atom has one extra electron (Re), the lattice becomes n-type. Doping is usually limited to below 1% substitution. In the case of alloying, the guest atoms come in significant concentrations (>1%). If the percolation limit is surpassed (e.g. Mo_{0.75}Nb_{0.25}S₂) the lattice becomes essentially metallic.

Following the successful synthesis of the IF nanoparticles and nanotubes, foreign atoms have been incorporated into their lattice by intercalation of IF nanoparticles. For instance, IF nanoparticles of MoS₂ and WS₂ were intercalated by exposure to alkali metal (potassium and sodium) vapor using a two-zone transport method [5]. Alloying or doping of inorganic nanotubes has been reported for specific cases of Ti-doped MoS₂ nanotubes, Nb-doped WS₂ nanotubes [13(a),(b)]. In addition, W-alloyed MoS₂ nanotubes have been synthesized by varying the W:Mo ratio [13(c)]. Zhu Y Q et al, CHEMICAL PHYSICS LETTERS, vol. 342, (2001), pages 15-21 discloses Nb-doped WS₂ nanotubes, typically W₁₋ₓNbₓS₂ with x≤0.2 (Abstract) prepared by heating Nb₂O₅-coated W₁₈O₄₉ nanorods in H₂S.

The effect of Nb substitution on the electronic structure of MoS₂ was investigated theoretically using density functional tight binding method (DFTB) [6]. However, no scientific and experimental confirmation for the control of electrical properties of either nanotubes or fullerene-like nanoparticles by alloying/doping was reported. The intercalation in these compounds is mediated by their structure and can bring about significant changes in their structure and their physical properties. By varying the intercalant and its concentration, a large number of compounds with different properties can be prepared. The intercalation reaction is generally accompanied by charge transfer between the intercalating species and the host layer, which serves as the driving force for the intercalation reaction. The transition metal dichalcogenides only form intercalation complexes with electron donor species, so the process here is of electron transfer from the guest moiety to the host lattice. Such process can be used to 'fine tune' the electronic properties of the host material in a controllable way. It is thus possible to achieve semiconductor-to-metal transitions with intercalation. It must be born in mind though that the intercalated nanoparticles are very sensitive to the ambient atmosphere and generally loose their unique electrical properties after short exposure to the atmosphere.

### SUMMARY OF THE INVENTION

The present invention is based on the synthesis and formation of mixed phase inorganic fullerene-like (IF) nanostructures of the general structural formula A₁₋ₓ-Bₓ-chalcogenides as disclosed in claim 1 and elucidating their structural and electronic properties. B is incorporated into the lattice of the A-chalcognide altering its characteristics *inter alia* as a function of the nature of A, B and the amount of incorporated B, i.e. the value of x in the A₁₋ₓ-Bₓ-chalcogenide lattice. The incorporation of Bₓ into the lattice of the A-chalcogenide produces changes in the electronic properties leading to the formation of high conductivity semiconductors or even a metal and metal-like nanoparticles from a previously known semiconductor (i.e. the selected A-chalcogenide).

Thus the present invention is directed to fullerene-like (IF) nanostructure of the formula A₁₋ₓ-Bₓ-chalcognide, as disclosed in claim 1.

The compound A is a metal or transition metal or an alloy of metals or transition metals selected from the following: Mo, W, Re, Ti, Zr, Hf, Nb, Ta, In, Ga, WMo, TiW. The compound B is also a metal or transition metal selected from the following: Nb, Ta, W, Mo, Sc, Y, La, Hf, Ir, Mn, Re, V, Au, Rh, Pd, Cr, Co, Fe, Ni. Within the nanostructure, B and/or B-chalcogonide are incorporated within the A₁₋ₓ-chalcognide. The chalcognide is selected from the S, Se, Te. For example, IF nanostructure of the invention may be IF-Mo₁₋ₓNbₓS₂, IF-Mo(W)₁₋ₓReₓS₂, the alloys of WMoS₂, WMoSe₂, TiWS₂, TiWSe₂, where Nb or Re are doped therein. Within the alloys of the invention, taking WMo, TiW for example, the ratio between W and Mo or Ti and W may be 0.65-0.75 of one metal or transition metal and 0.25-0.35 of the other metal or transition metal, e.g. W_{0.7}Mo_{0.29}Nb_{0.01}S₂ (given with the percentage of the Nb dopant).

By incorporated it is meant that the B and/or B-chalcogonide are doped or alloyed uniformly within the A₁₋ₓ-chalcognide lattice. The B and/or B-chalcogonide substitute the A atom within the lattice. Such substitution may be continuous or alternate substitutions. Continuous substitution are spreads of A and B within each layer alternating randomly (e.g. (A)ₙ-(B)ₙ, n > 1). Depending on the concentration of incorporated B, it may replace a single A atom within A₁₋ₓ-chalcognide matrix forming a structure of (...A)n-B-(A)n-B...). Alternate substitution means that A and B are alternately incorporated into the A₁₋ₓ-chalcognide lattice (...A-B-A-B...). It should be noted that other modes of substitution of the B in the A-chalcognide lattice are possible according to the invention. Since the A-chalcognide has a layered structure, the substitution may be done randomly in the lattice or every 2, 3, 4, 5, 6, 7, 8 , 9 or 10 layers.

The present invention is further directed to a process for the synthesis of the inorganic fullerene-like (IF) nanostructure of the general structural formula A₁₋ₓ-Bₓ-chalcogenides as disclosed in claim 1. In accordance with the present invention A-Y₁ and B-Y₂ compositions each in vapor phase, where Y₁ and Y₂ are independently halogens (i.e. may or may not be the same) selected from chlorine, bromine or iodine are employed. The A-Y₁ and BY₂ vapors are flown into a reaction chamber together with the aid of a forming gas containing a reducing agent and an inert carrier gas. In the chamber the combined gas stream meets in an opposite direction a flow of a chalcognide carrying reacting gas, thereby causing occurrence of reduction of the A and B metals or transition metals followed by a reaction with the chalcognide carrying reacting gas resulting in the formation of said nanostructures.

Preferably, the A-Y₁ and B-Y₂ compositions in the vapor phase are prepared by evaporating A-Y₁ and B-Y₂ compositions in a chamber separate from the reaction chamber. A common or separate evaporation chambers may be used for preparation of vapors of the A-Y₁ and B-Y₂ compositions.

In accordance with the present invention, the metal or transition metal A-chalcognide precursor may be a semiconductor of a certain electrical conductivity. Upon the insertion of an appropriate B element, the resulting IF nanostructure produced from said precursor has a higher electrical conductivity. Thus, the invention provides for manufacture of a nanostructured electrical conductor, or generally speaking provides for electronic modifications by the incorporation of B into the lattice of the A-chalcognide precursor. In accordance with the present invention, the metal atom B substitutes the metal A in the original lattice. Generically, atom B may have one extra valence electron or may be deficient in one such electron compared to the original A metal atom leading to n-type (donor) and p-type (acceptor) conductivity.

Thus, the present invention is further directed to novel donor composition (electron conductors) formed by IF-nanostructures, e.g. Re doped IF-MoS₂ and IF-WS₂, and novel acceptors (hole conductors), e.g. Nb doped IF-MoS₂ and IF-WS₂. Other possible donor or acceptors according to the present invention are InS doped with Si being p-type or GaSe, InSe doped with Zn or Cd being n-type conductors.

### BRIEF DESCRIPTION OF THE DRAWINGS

In order to understand the invention and to see how it may be carried out in practice, embodiments will now be described, by way of non-limiting example only, with reference to the accompanying drawings, in which:
**Figs. 1A-1C** show three tables presenting, respectively, various metal precursors suitable for the synthesis of the doped IF nanoparticles; IF-nanoparticles with possible p-type or n-type dopants; and IF-nanoparticles with possible magnetic dopants/impurities.
**Figs. 2A-2B** is an example of an apparatus suitable for the manufacture of IF-nanostructures of the present invention including a main reactor (Fig. 2A) and a separate auxiliary furnace (Fig. 2B).
Fig. 3 shows XRD pattern of (a) IF-MoS₂ and (b) IF-Mo₁₋ₓNbₓS₂ nanoparticles prepared at T₁ = 850 °C and T₂ =900 °C (series-2). Standard diffraction patterns of 2H-MoS₂ (long lines) and 2H-NbS₂ (short lines) are also shown for comparison.
**Fig. 4** shows a zoom-in look of (002) peaks from Figure 2. Standard diffraction patterns of 2H-MoS₂ (long line) and 2H-NbS₂ (short line) are also shown for comparison.
**Figs. 5A-5D** show (Fig. 5A) TEM image of the IF-Mo₁₋ₓNbₓS₂ nanoparticles prepared at T₁ = 800 °C and T₂ = 850 °C (series-1), (Fig. 5B) and (Fig. 5C) HRTEM images of the IF-Mo₁₋ₓNbₓS₂ nanoparticles prepared at T₁ = 850 °C and T₂ = 900 °C (series-2). (Fig. 5D) shows the EDS spectra of the IF-Mo₁₋ₓNbₓS₂ nanoparticle in (Fig. 5C).
**Figs. 6A-D** show (Fig. 6A) HRTEM image and (Fig. 6B) the corresponding EELS spectrum of the IF-Mo₁₋ₓNbₓS₂ nanoparticles prepared at T₁ = 850 °C and T₂ =900 °C (series-2), (Fig. 6C) Exploded view of a portion of nanoparticle in (Fig. 6A) showing mismatch in the layers, (Fig. 6D) HRTEM of another IF nanoparticle showing defects/dislocations in the layers.
**Figs. 7A-7C** show (Fig. 7A) HRTEM image and (Fig. 7B) the expanded view of a portion of the IF-Mo₁₋ₓNbₓS₂ nanoparticles prepared at T₁ = 850 °C and T₂ =900 °C (series-2), (Fig. 7C) Line profile of the boxed are in (Fig. 7B) shows the interlayer spacing to be 6.4 Å.
**Figs. 8A-8D** disclose images of elemental mapping by energy-filtered TEM (EFTEM) of IF-Mo₁₋ₓNbₓS₂ nanoparticle, with a thin surface oxide layer. (Fig. 8A) Zero-loss image; (Fig. 8B) Sulfur map measured around the S L_{2,3} edge (167-187eV); (Fig. 8C) Niobium map measured around the Nb L₃ edge (2370-2470eV); (Fig. 8D) Oxygen map measured around the O K edge (532-562eV).
**Fig. 9** exhibits XPS line shape analysis of the Nb 3d signal (with Gaussian-Lorenzian components). Reduced Nb (I and II) is believed to be within the nanoparticles. The oxidized Nb (III) appears on the particle surfaces.

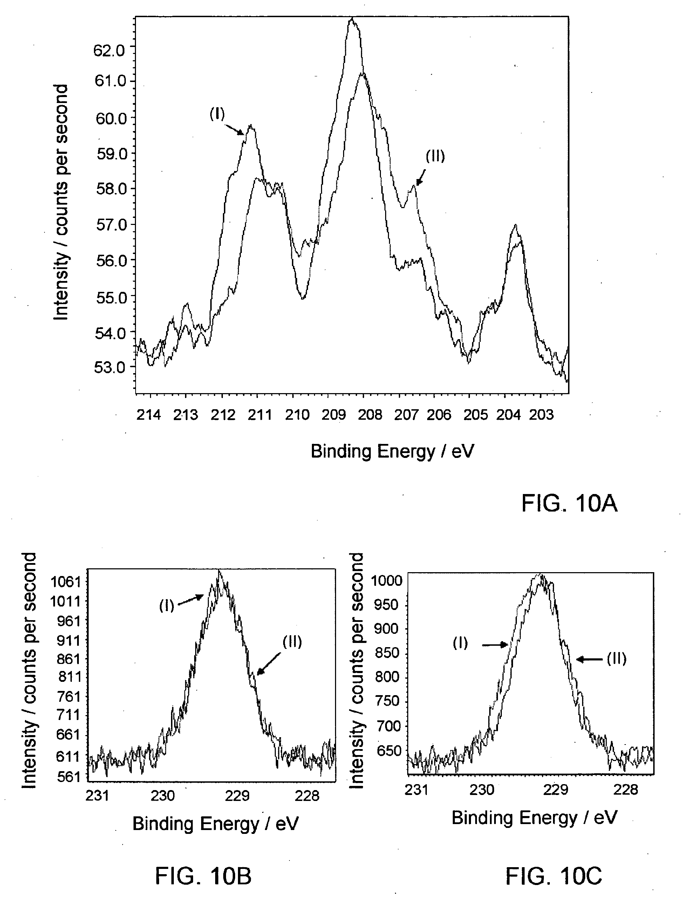

**Figs. 10A-10C** demonstrate electrically induced line shifts of the XPS lines in the CREM mode: (Fig. 10A) Nb(3d), (Fig. 10B) Mo (3d_{5/2}) in IF-Mo₁₋ₓNbₓS₂ nanoparticles, (Fig. 10C) Mo (3d_{5/2}) in IF-MoS₂ nanoparticles. In all panels, curve (I) corresponds to 'eFG off (electron flood gun off) conditions and curve (II) refers to 'eFG on'. Note that (panel Fig. 10A) the oxidized Nb exhibits a large shift while the reduced Nb signal is practically not shifted at all. Comparison of panels (Fig. 10B) and (Fig. 10C) demonstrates the effect of Nb substitution on the Mo line shift, indicating improved conductance in the IF-Mo₁₋ₓNbₓS₂ nanoparticles as compared to the undoped IF-MoS₂ nanoparticles.
**Figs. 11A-11C** exhibit AFM measurements carried out on an IF-Mo₁₋ₓNbₓS₂ nanoparticle (Fig. 11A) AFM image, (Fig. 11B) I/V curves carried out on the nanoparticle (dashed lines), (Fig. 11C) corresponding dI/dV vs V plots. In both Fig. 11B and Fig. 11C, the corresponding plots of the IF-MoS₂ nanoparticle are shown for comparison (solid lines))
**Figs. 12A to 12C** show a schematic presentation of the substitutional patterns of the Nb atoms within the IF-Mo₁₋ₓNbₓS₂ lattice.
**Figs. 13A and 13B** show an experimental setup used in other examples of the invention including a main reactor (Fig. 12A) and a separate auxiliary furnace (Fig. 12B).
**Figs. 14A-14C** show images and EDS spectra of obtained IF-nanostructures; **Figs. 14A** and **14B** show HRTEM images of IF-Mo₁₋ₓReₓS₂ nanoparticles synthesized at 850°C. **Fig. 14C** show the EDS spectra of the IF-Mo₁₋ₓReₓS₂ nanoparticles shown in 14B.
**Figs. 15A-15D** show the experimental results: **Fig. 15A and 15B** are, respectively, the TEM and the EDS spectra of the IF-Mo₁₋ₓReₓS₂ nanoparticles synthesized at T₁ = 800 °C, **Fig. 15C** is the individual HRTEM image of the IF-Mo₁₋ₓReₓS₂ nanoparticles synthesized at T₁ = 900°C; and **Fig. 15D** shows the HRTEM images of IF-W₁₋ₓReₓS₂ nanoparticle synthesized at T₁ = 900°C.
**Fig. 16** shows an XRD pattern of IF-Mo₁₋ₓReₓS₂ nanoparticles prepared at (a) 850°C and (b) 900°C. Standard diffraction patterns of 2H-MoS2 and 2H-ReS2 are also shown for comparison. The asterix (*) in the diffraction pattern correspond to the peak arising from the filter used for collecting the nanoparticles. Also are shown in pattern are the peak of the oxide of Re (ReO₃ - #) and Mo (MoO₂ - +) which are undesirable product of the non-optimized reaction.
**Fig. 17** shows a schematic drawing of the structure of a fragment of Re-doped (14,14) MoS₂ nanotube.
**Figs. 18A-18D** show the HRTEM images of IF-W₁₋ₓReₓS₂ nanoparticles synthesized at 900°C. **Fig. 18A** and **Fig. 18B** show HRTEM images of elongated and faceted nanoparticles, respectively; **Fig. 18C** shows the EDS spectra of the synthesized nanoparticles. **Fig. 18D** gives a "ruler" for elucidating the dimensions of the obtained nanoparticles.

### DETAILED DESCRIPTION OF EMBODIMENTS

The present invention is aimed at providing IF nanoparticles as disclosed in claim 1.

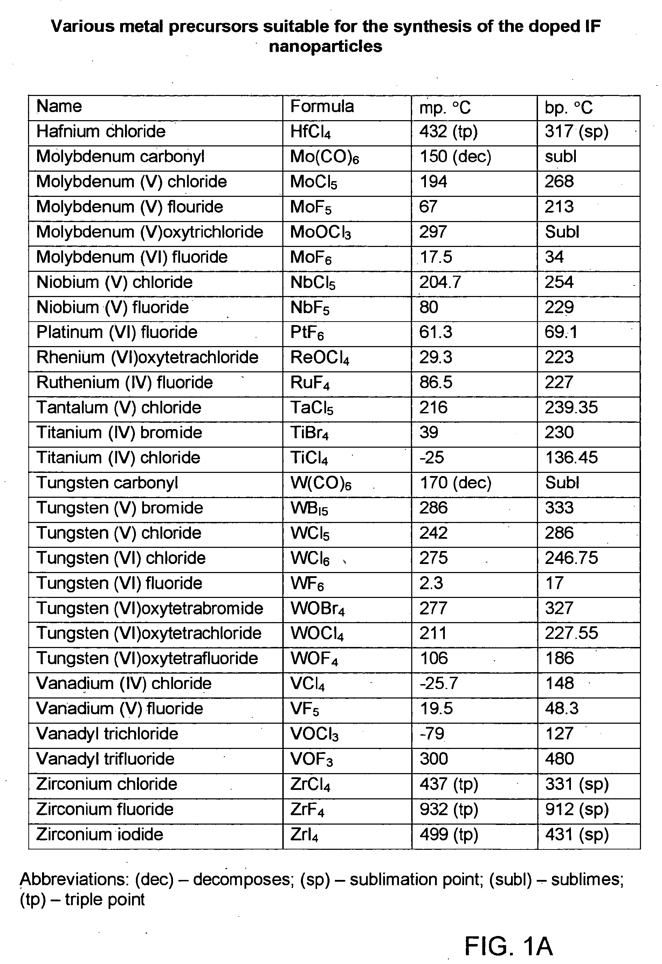

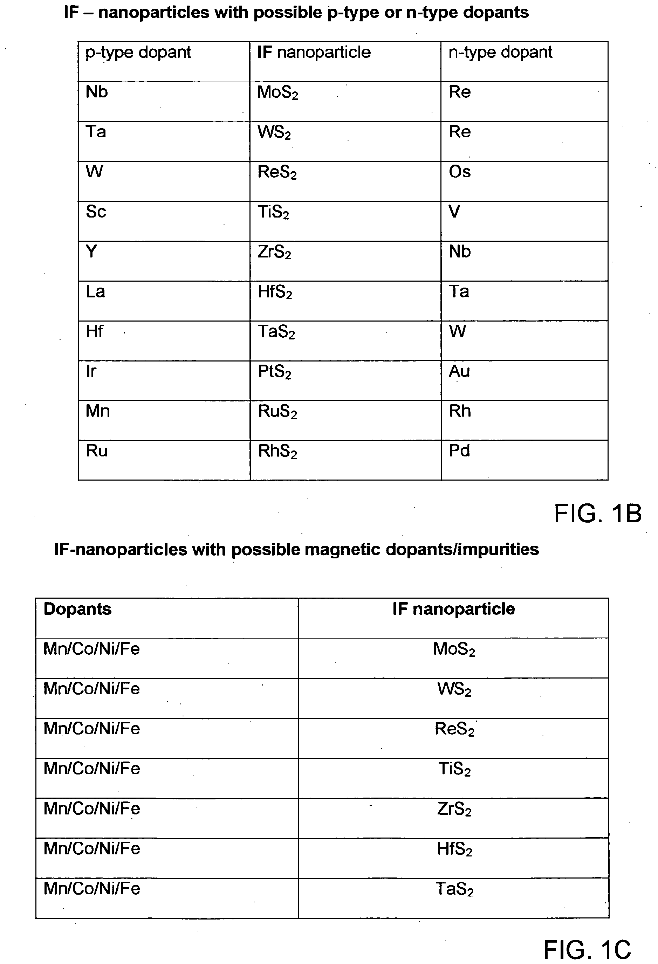

It should be noted that when the concentration of a dopant (i.e. component B in A₁₋ₓBₓS₂) is not larger than at 1%, the B atoms are generally distributed as single atoms randomly in the lattice of the host. In this case, the properties of the A-chalcognide lattice (like the energy gap) are preserved. Each guest atom (B) contributes an electron (donor) or hole (acceptor) and the carrier density of the host lattice is thereby modified. Under these conditions, the best control over the conductivity and tunability over the physical properties of the A-chalcognide lattice is accomplished. When the concentration of the guest-B is larger than about 1%, clusters of B atoms and even regions of a sublattice-B-chalcognide within the host lattice-A-chalcognide are formed, in which case many of the physical properties of the lattice (like energy gap) are determined by the two sublattices according to some mixture rules. If the enthalpy of the two A-chalcogenide and B-chalcogenide compounds are very different, non-random distribution and even segregation of two distinguishable phases may occure in the lattice. The IF-nanostructure of the present invention are characterized by the best doping effects achieved by adding substantially not more than 1% of the guest. Some specific but not limiting examples of the novel composition of the present invention are IF-Mo₁₋ₓNbₓS₂ and IF-Mo(W)₁₋ₓReₓS₂, where Nb and Re respectively are incorporated (doped or alloyed) into Mo- and Mo- or W-chalcogenide. **Figs. 1A to 1C** show three tables exemplifying, respectively, various metal precursors suitable for the synthesis of the doped IF nanoparticles; IF-nanoparticles with possible p-type or n-type dopants; and IF-nanoparticles with possible magnetic dopants/impurities.

The structure of Mo-chalcognide and Nb-chalcognide (in particular MoS₂ and NbS₂) can be described as follows. In analogy with graphite, the unit cell of MoS₂ is made of two layers in hexagonal arrangement (2H). The Mo atom is covalently bonded to six sulfur atoms in trigonal biprism coordination. The interlayer spacing (*c*/*2*) is 6.15 Å. The interlayer spacing in the case of the IF-MoS₂ nanoparticles (6.2 Å) is slightly larger than the c/2 parameter of bulk 2H-MoS₂ polytype (6.15 Å) [1- 3]. This expansion seen in the case of the IF-MoS₂ nanoparticles serves to alleviate the strain involved in the folding of the IF structure. In case of NbS₂, the various Nb-S phases were initially investigated revealing the existence of two polymorphs of the layered disulfide: the rhombohedral-3R (*R3m*) polytype with a unit cell consisting of three NbS₂ slabs which is formed when the elements are heated below 800 °C. In this case the interlayer spacing was found to be 5.96 Å. The hexagonal-2H (*P63*/*mmc*) polymorph with a unit cell consisting of two NbS₂ slabs is obtained above 850 °C. The c/2 spacing is 5.981 Å in this case. In both polytypes the Nb is bonded to six neighboring sulfur atoms in octahedral coordination. Nonstoichiometric 3R-Nb₁₊ₓS₂ compounds were also found. Further studies showed that the 3R polytype exists in the range 0 < x < 0.18, while the 2H polytype is stable only for small deviations from stoichiometry. Both phases exhibit metallic behavior, and the 2H-phase shows even superconductivity below 6.23 K. It was noticed that the excess niobium atoms are actually intercalated in the vdW gap between each two NbS₂ layers. In the case of the IF-NbS₂ nanoparticles, which were synthesized by gas phase reaction, the interlayer spacing was found to be in the range 5.9 - 6.35 Å for the small (20 - 40 nm) particles and 6.2 Å for the larger (60 - 80 nm) ones. Annealing the as-obtained IF-NbS₂ nanoparticles resulted in a layer spacing varying from 6.15 to 5.9 Å and more faceted nanoparticles [7].

As for the layered transition-metal dichalcogenide ReS₂, it is a diamagnetic semiconductor that possesses an indirect gap in the near-infra-red (NIR) region of about 1.37 eV. The layered ReS₂ compound is of considerable interest for various applications (e.g. sulfur-tolerant hydrogenation and hydrodesulfurization catalyst, a solar-cell material in electrochemical cells) due to its optical, electrical and mechanical properties. The ReS₂ framework with a trigonal unit cell (crystallizes in s distorted C6 astructure) has the substructural motif consisting of Re₄ parallelogram units containing Re-Re metal bonds. IF-ReS₂ nanoparticles have been prepared by the direct sulfidization of ReO₂, formed from the decomposition of ReO₃ [14]. By adopting the MWCNT-templating approach, it has been also possible to prepare nanotubes of ReS₂ [15]. The crystal structure of MoS₂ (2H or 3R) is different than that of ReS₂ (C6). Therefore, it is not expected that the two different lattices would intermix and solid solutions of ReS2 and MoS2 would be miscible. Similar behavior was found in the case of growth of Re-doped MoS₂ single crystals wherein a 5 % nominal doping or higher of Re in MoS₂ prevented the growth of single crystals [16]. In addition contrary to other layered MS₂ compounds (MoS₂ and WS₂), ReS₂ contains in its bulk form metal-metal bonded clusters (Re₄) and metal atoms that are octahedrally rather than trigonal prismatically coordinated with sulfur. Consequently, 0.5% and 1% rhenium-doped (Re-doped) Mo(W)S₂ single crystals have been grown by the chemical vapor transport method with Br₂ as a transport agent. The Re doping was found to induce n-type conductivity of the Mo(W)S₂ crystal [17].

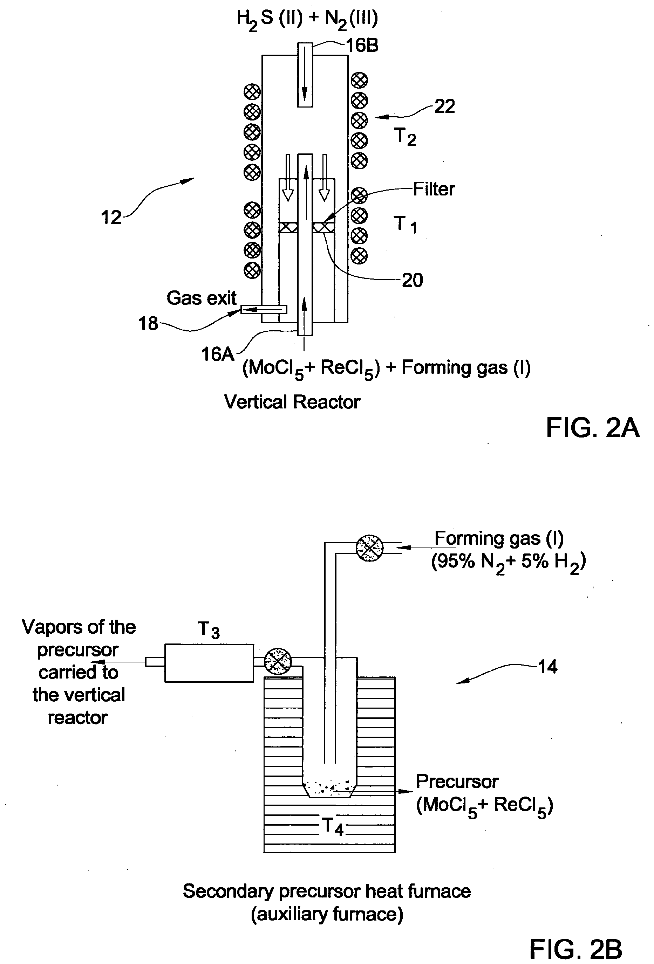

Reference is made to **Figs. 2A-2B** exemplifying an apparatus, generally designated **10,** suitable to be used for the manufacture of such IF nanostructures. The apparatus **10** includes a vertical reaction chamber **12** associated with a separate therefrom and connectable thereto evaporation chamber **14.** The reaction chamber **12** has first and second inlet units **16A** and **16B** arranged so as to enable to flow therethrough reacting materials towards one another in opposite directions. The inlet unit **16A** serves for supplying a flow of vapors of two precursor compositions A-Y₁ and B-Y₂, where each of A and B is a metal or transition metal and Y₁/Y₂ is/are halogen(s) independently selected from chlorine, bromine or iodine, together with a reducing agent carrying forming gas. The inlet unit **16B** located at the opposite edge of the vertical reactor serves for supplying a flow of a chalcognide carrying reacting gas.

In the present specific but not limiting example, the precursor compositions are MoCl₅ and NbCl₅; and the chalcognide carrying reacting gas is H₂S. The reducing agent carrying forming gas is H₂.

The reaction chamber **12** further includes a gas outlet **18,** and a filter **20.** The reaction chamber is associated with a heating unit **22** configured to form a two-stage furnace for the synthesis of e.g. IF-Mo₁₋ₓNbₓS₂ nanoparticles: at the upper and lower parts of the chamber **12** different first and second temperature conditions T₁ and T₂ are provided.

Thus, vapors of MoCl₅ and NbCl₅ undergo a reduction reaction while interacting with H₂ gas during their flow towards a reaction zone where they meet H₂S reacting gas. The reduction reaction is thus followed by a reaction with H₂S resulting in the formation of IF-Mo₁₋ₓNbₓS₂ nanoparticles.

The vapors of MoCl₅ and NbCl₅ are produced in the separate (auxiliary) evaporation chamber **14.** It should be noted that generally separate chambers could be used for evaporating therein the two precursors, respectively, MoCl₅ and NbCl₅ in the present example. It should also be noted that H₂ gas can be supplied into the evaporation chamber thereby causing a reduction reaction to start while the precursor compositions are being evaporated in the evaporation chamber.

Thus, in the above-described example, mixed phase IF-Mo₁₋ₓNbₓS₂ nanoparticles are prepared (synthesized) by a vapor-based method (vapor-phase reaction) starting from the respective volatile metal chloride precursors in combination with H₂S. The IF-Mo₁₋ₓNbₓS₂ nanoparticles, containing up to 25% Nb (not all according to the invention), were characterized by a variety of experimental techniques. Analysis of the X-ray powder diffraction; X-ray photoelectron spectroscopy, and different electron microscopy techniques, show that the majority of the Nb atoms are organized as nanosheets of NbS₂ within the MoS₂ host lattice. Most of the remaining Nb atoms (3%) are interspersed individually and randomly in the MoS₂ host lattice. Very few Nb atoms, if any, are intercalated between the MoS₂ layers. A sub-nm film of niobium oxide seems to encoat the majority of the nanoparticles. This unfavorable coating could be eliminated by reducing the rate of the NbCl₅ evaporation. X-ray photoelectron spectroscopy in the chemically resolved electrical measurement mode (CREM) and scanning probe microscopy measurements of individual nanoparticles show that the mixed IF nanoparticles are metallic independent of the substitution pattern of the Nb atoms in the lattice of MoS₂ (whereas unsubstituted IF-MoS₂ nanoparticles are semiconducting). In other words, the so obtained IF nanostructures have electrical conductivity appreciably higher than that of a semiconductor A in the A-chalcognide precursor.

Generally, the invented technique can be used for obtaining one of the following type IF nanostructures: Mo₁₋ₓNbₓS₂, Mo₁₋ₓNbₓSe₂, W₁₋ₓTaₓS₂, W₁₋ₓTaₓSe₂, Re₁₋ₓWₓS₂, Ti₁₋ₓScₓS₂, Zr₁₋ₓYₓS₂, Hf₁₋ₓLaₓS₂, Ta₁₋ₓHfₓSe₂, Mo₁₋ₓReₓS₂, W₁₋ₓReₓS₂, Ti₁₋ₓVₓS₂, Zr₁₋ₓNbₓS₂, Hf₁₋ₓTaₓS₂, Ta₁₋ₓWₓS₂. Those structures can lead to enhanced electrical conductivity of the otherwise semiconducting A-chalcogenide IF nanostructures.

The following are some example of the preparation of IF-nanostructures of present invention. Generally, characterization of all synthesized nanoparticles of the presnet invention was done in the following manner:
A vertical theta-theta diffractometer (TTRAX III, Rigaku, Japan) equipped with a rotating Cu anode operating at 50 kV and 200 mA was used for x-ray powder diffraction (XRD) studies. The measurements were carried out in the reflection Bragg-Brentano mode within the range of 10-70° of 2Θ-angles. XRD patterns were collected by a scintillation detector. The minute quantities of material available dictated a very slow data rate (0.05 °/min). The peak positions and shapes of the Bragg reflections were determined by a self-consistent profile-fitting procedure using the Jade 8 software. XRD was carried out on both the IF-Mo(W)₁₋ₓReₓS₂ (from this work) and IF-MoS₂/IF-WS₂ nanoparticles (used as a reference) [7a,b].

The following electron microscopes were used in this work: transmission electron microscope (Philips CM120 TEM) operating at 120kV, equipped with EDS detector (EDAX-Phoenix Microanalyzer); HRTEM with field emission gun (FEI Technai F30-UT) operating at 300kV, equipped with a parallel electron energy loss spectrometer [Gatan imaging filter-GIF (Gatan)]. For electron microscopy and analysis the collected powder was sonicated in ethanol and placed on a carbon-coated Cu grid (for TEM) or on lacy carbon-coated Cu grids (for HRTEM and EELS).

X-ray photoelectron spectroscopy (XPS) was carried out using a Kratos AXIS-HS spectrometer at a low power (75 W) of the monochromatized Al (Kα) source. The samples for XPS analyses were prepared by depositing a few drops of the nanoparticles sonicated in ethanol, onto an atomically flat Au substrate (SPI supplies, thickness-150 nm) or onto Au polycrystalline films coating Si substrates.

### Example 1 - Preparation of IF Mo₁₋ₓNbₓS₂ nanoparticles

The synthesis of the IF-Mo₁₋ₓNbₓS₂ nanoparticles was carried out starting from the precursors MoCl₅ (Aldrich) and NbCl₅ (Alfa Aesar) in reaction with H₂S using the vertical reactor shown in **Fig. 2A**. Before each growth session, the vertical reactor being the reaction chamber **12** was preset to higher temperatures of about 600°C and was purged continuously with N₂ in order to prevent traces of O₂ and water vapor that would otherwise interfere with the course of the reaction.

Precursors MoCl₅ (0.550 g; m.pt = 194°C, b.pt = 268 °C) and NbCl₅ (0.010 g m.pt = 204.7°C, b.pt = 254°C) were first heated in the auxiliary furnace (evaporation chamber) **14** to a temperature of ∼ 250°C (T₄). In order to avoid condensation of the vapors of the precursor, before it reaches the vertical reactor **12,** a preset temperature of 220 °C (T₃) was maintained along the length of a tube (not shown) connecting the chambers **14** and **12** using a heating band. The vapors of the precursor were carried from below (i.e. through inlet **16A** at the bottom edge of the reactor **12**) into the hot zone (kept at a preset temperature, e.g. 900 °C) by flowing 50 cc of forming gas (I) (95 % N₂ and 5 % H₂). Forming gas was used to ensure complete reduction of the metal chloride precursors. Simultaneously, 5 cc H₂S (II) was introduced from above (i.e. through inlet **16B** at the top edge of the reactor **12**) mixed along with 50 cc of N₂ (III). The typical time period for each reaction was 30 min.

Two series of reactions (see Table 1 below) were carried out, wherein the temperature inside the reaction chamber **12** was maintained at (i) T₁ = 800 °C and T₂ = 850 °C (series-1) and (ii) T₁ = 850 °C and T₂ = 900 °C (series-2). At the end of the reaction, the product was collected (as a black colored powder) at the hot zone of the reactor **12** by means of the quartz wool filter **20,** and was subsequently analyzed by various characterization techniques as detailed in Table 1 below.

**Table 1:**

| Temp of vertical Reactor **12** | Temp. of Chamber **14** | Gas flow Rate | Size of obtained IF-Mo₁₋ₓNbₓS₂ nanoparticles | Physical description of obtained IF-nanoparticles |
|---|---|---|---|---|
| Series -1 | | Forming gas (I)=50cc; (95%N₂; 5%H₂) | ∼ 50 nm | Spherical IF nanoparticles |
| T₁ = 800°C | T₃ = 220°C | H₂S (II) = 5cc | | |
| T₂ = 850°C | T₄ = 250°C | N₂(III) = 50cc | | |
| Series -2 | | Forming gas (I)=50cc; (95%N₂; 5%H₂) | ∼ 40 nm | IF nanoparticles More faceted |
| T₁ = 850°C | T₃ = 220°C | H₂S (II) = 5cc | | |
| T₂ = 900°C | T₄ = 250°C | N₂(III) = 50cc | | |

X-ray powder diffraction (XRD) studies were applied to the product using a vertical theta-theta diffractometer (TTRAX III, Rigaku, Japan) equipped with a rotating Cu anode operating at 50 kV and 240 mA. The measurements were carried out in the reflection Bragg-Brentano mode within the range of 10-70° of 2Θ-angles. XRD patterns were collected by a scintillation detector. The minute quantities of material available dictated a very slow data rate (0.05 °/min). The peak positions and shapes of the Bragg reflections were determined by a self-consistent profile-fitting procedure using the Jade 8 software. XRD was carried out on both the IF-Mo₁₋ₓNbₓS₂ (from this work) and IF-MoS₂ nanoparticles (used as a reference).

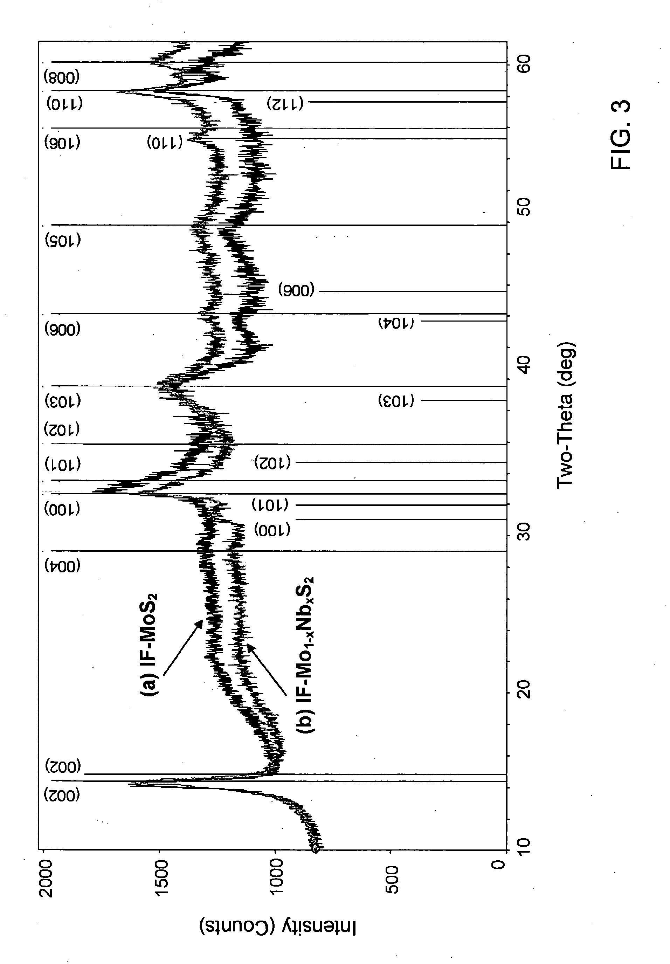

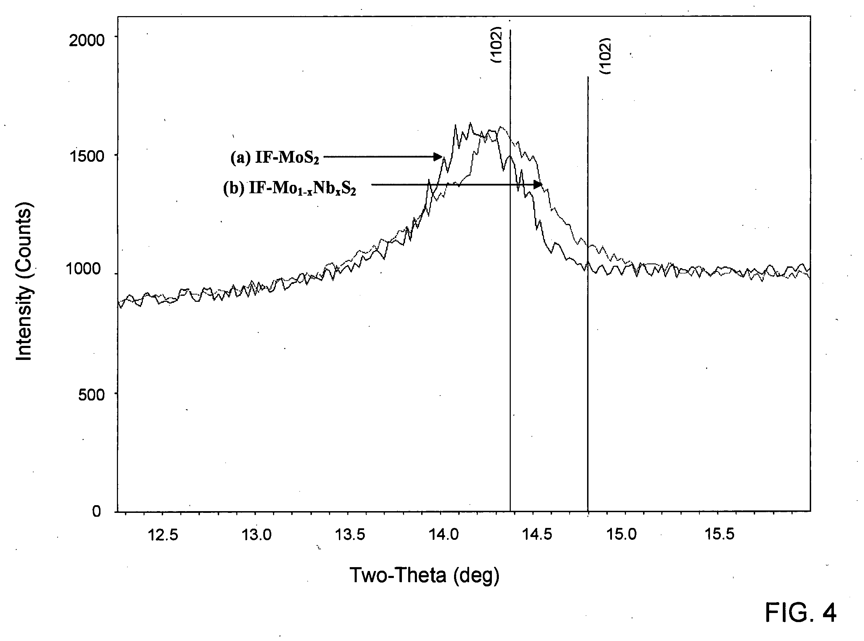

**Fig. 3** shows the XRD patterns obtained from for (a) IF-MoS₂ and (b) IF-Mo₁₋ₓNbₓS₂ nanoparticles (series-2) synthesized as described above prepared at T₁ = 850 °C and T₂ =900 °C (series-2). **Fig. 4** shows a zoom-in look of (002) peaks from **Fig. 3****.** In both figures, standard diffraction patterns of 2H-MoS₂ (long line) and 2H- NbS₂ (short line) are shown for comparison.

A halo around 22° in **Fig. 3** is due to the traces of amorphous quartz wool, which was used as a filter for collecting the synthesized nanoparticles. It is seen that the peaks of the first pattern (**Fig. 3**, curve a) matches IF-MoS₂ nanoparticles (used as a reference), while the second pattern corresponds to IF-Mo₁₋ₓNbₓS₂ nanoparticles (**Fig. 3**, curve b). The peaks in the IF-Mo₁₋ₓNbₓS₂ phase match well with that of IF-MoS₂. A detailed comparison between IF-MoS₂ and IF-MoNbS₂ (**Figs. 3** and **4**) diffraction patterns shows some shifts of the (*002*) and *(110)* peaks. Comparing the (*002*) peaks at ∼14° for both IF-MoS₂ and IF-Mo₁₋ₓNbₓS₂ (**Figs. 3** and **4**) it can be concluded that one of them (IF-MoS₂, **Fig. 3****,** curve **a** and **Fig. 4****,** curve **a**) has a symmetric shape while the other (IF-Mo₁₋ₓNbₓS₂ **Fig. 3****,** curve b and **Fig. 4****,** curve b) does not. The peak profile (∼ 14°, **Fig. 4****,** curve b) is certainly not symmetric and probably consists of two peaks corresponding to c-axis spacings of 6.4 Å and 6.165 Å. The *(110)* peak at ∼ 58° of IF-Mo₁₋ₓNbₓS₂ (**Fig. 3**) has a very small shift (about 0.08°) to lower angles with respect to the IF-MoS₂ *(110)* peak. There are additional peaks at 2.88 Å (31°) and 1.66 Å (55.3°) which are best suited to the (*100*) and *(110)* reflections of the 2H-NbS₂ phase. Moreover, the peak profile around 31° exhibits an asymmetry (fast intensity increase and slow decrease with increasing angle) which is similar to the shape of the (*100*) reflection of IF-MoS₂ at 32.7° (**Fig. 3**, curve a). This latter peak is a typical example for the strongly asymmetric line shapes of the (*h00*) peaks of layered materials with relatively small number of stacked molecular layers [12]. The absence of any other NbS₂ peak could be attributed to their relatively small concentration and their poor lattice order, which leads to low intensity of the NbS₂-related peaks in the noisy spectrum. All the other mixed (*hkl*) peaks would be expected to be suppressed completely if it is assumed that the NbS₂ structures form a turbostratically (misaligned layers) stacked system with randomness in translation and rotation of the layers. This may also be the reason for the broadening of the (*002*) peak (∼14°) in the case of the IF-Mo₁₋ₓNbₓS₂ nanoparticles.

The X-ray diffraction data presented above indicates that the as-synthesized IF-Mo₁₋ₓNbₓS₂ nanoparticles are comprised of two phases corresponding to those of (Nb doped) MoS₂ and NbS₂. The presence of a distinct phase with Nb as an intercalant is supported neither by the XRD nor by the electron diffraction. If existed, such a phase would be revealed by typical (*00l*) peaks at lower angles (larger interlayer spacing) [5]. The presence of a broad (*002*) peak (and the shift of this peak toward the position of (*002*) reflection of NbS₂) is indicative of the existence of fragments of a NbS₂ lattice incorporated turbostratically among the MoS₂ layers. Furthermore the presence of only (*hk0*) peaks of NbS₂ is indicative of the presence of the respective single layers. However, according to the Vegard's law, a small shift in the positions of the (*110*) peak in the case of IF-Mo₁₋ₓNbₓS₂ nanoparticles towards the position of (*110*) reflection of NbS₂ indicates substitution of a minor part (about 3%, not according to the invention) of individual Mo atoms by individual Nb atoms into the MoS₂ structure (in addition to the NbS₂ nanosheets interspersed in the MoS₂ structure). It should be noted that the corresponding change of the lattice parameter is so small that an expected shift of another in-plane (*100*) peak at 32.7° will be comparable with the error of the measurement and consequently cannot be observed. Thus, in addition to the sheets/stripes of NbS₂ present turbostratically among the MoS₂ layers, there is also the replacement of Mo atoms individually by Nb atoms in the case of IF-Mo₁₋ₓNbₓS₂ nanoparticles.

Extensive TEM investigations were carried out on the IF-Mo₁₋ₓNbₓS₂ nanoparticles. The following electron microscopes were used: transmission electron microscope (Philips CM120 TEM) operating at 120kV, equipped with EDS detector (EDAX-Phoenix Microanalyzer); HRTEM with field emission gun (FEI Technai F30-UT) operating at 300kV, equipped with a parallel electron energy loss spectrometer [Gatan imaging filter-GIF (Gatan)].

For electron microscopy and analysis the collected powder was sonicated in ethanol and placed on a carbon-coated Cu grid (for TEM) or on lacy carbon-coated Cu grids (for HRTEM and EELS). The energy windows for the elemental mapping by energy-filtered TEM (EFTEM) were chosen as follows (standard parameters of the software): Sulfur map was measured around the S L_{2,3} edge (167-187eV); Niobium map was measured around the Nb L₃ edge (2370-2470eV); Oxygen map was measured around the O K edge (532-562eV).

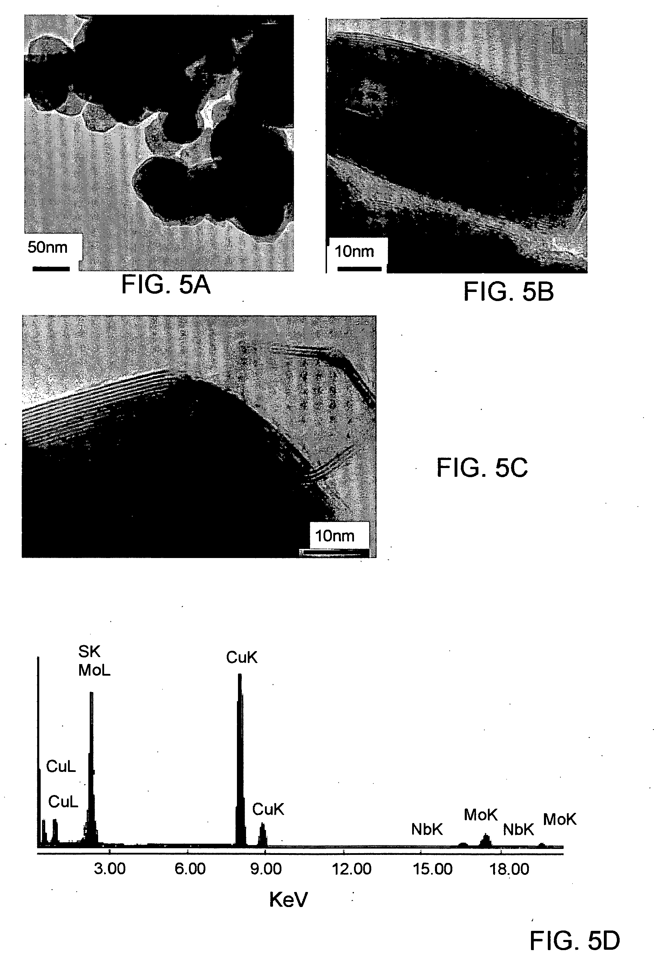

Reference is made to **Figs. 5A to 5D** showing the TEM and HRTEM images of the IF-Mo₁₋ₓNbₓS₂ nanoparticles: **Fig. 5A** shows a collection of IF-Mo₁₋ₓNbₓS₂ nanoparticles synthesized at T₁ = 800 °C and T₂ = 850 °C (series-1). As can be seen from the TEM image, the as-obtained IF nanoparticles are of uniform size distribution (diameter ∼ 50 nm). **Figs. 5B and 5C** present the HRTEM images of the IF-Mo₁₋ₓNbₓS₂ nanoparticles prepared at T₁ = 850 °C and T₂ = 900 °C (series-2), respectively. The diameter of the IF-Mo₁₋ₓNbₓS₂ nanoparticles obtained by this reaction is about ∼ 40 nm. However, occasionally some very large IF nanoparticles of about 200 nm in diameter can be also observed. **Fig. 5D** shows the EDS spectra of the IF-Mo₁₋ₓNbₓS₂ nanoparticle of Fig. 4C.

Niobium atoms are uniformly distributed in all the examined nanoparticles, irrespective of their size or shape. The presence of the characteristic and distinct Mo (K,L), S (K) and Nb (K,L) lines can be seen clearly. Comparing the IF nanoparticles of series-1 and series-2 cases, the series-2 IF nanoparticles are much more faceted and well crystallized. This is due to the higher synthesis temperature used in this case. The development of an IF structure displaying improved crystallinity and increased faceting with rising temperature was studied previously in the case of IF-NbS₂ and IF-TaS₂ [7,8]. The IF nanoparticle seen in **Fig. 5B** is reminiscent of a nanotube (nanotubes of undoped MoS₂ were obtained previously in the same temperature regime) [4a]. The growth of the nanoparticles is very fast (<1 s). The supply of the precursor gasses is unlimited and the nanoparticles remain in the hot zone of the reactor until the reaction is turned down (30 min). These observations are indicative of that the nanoparticles cease to grow due to energetic consideration. Similar considerations were found to control the size of WS₂ (MOS₂) nanotubes [10].

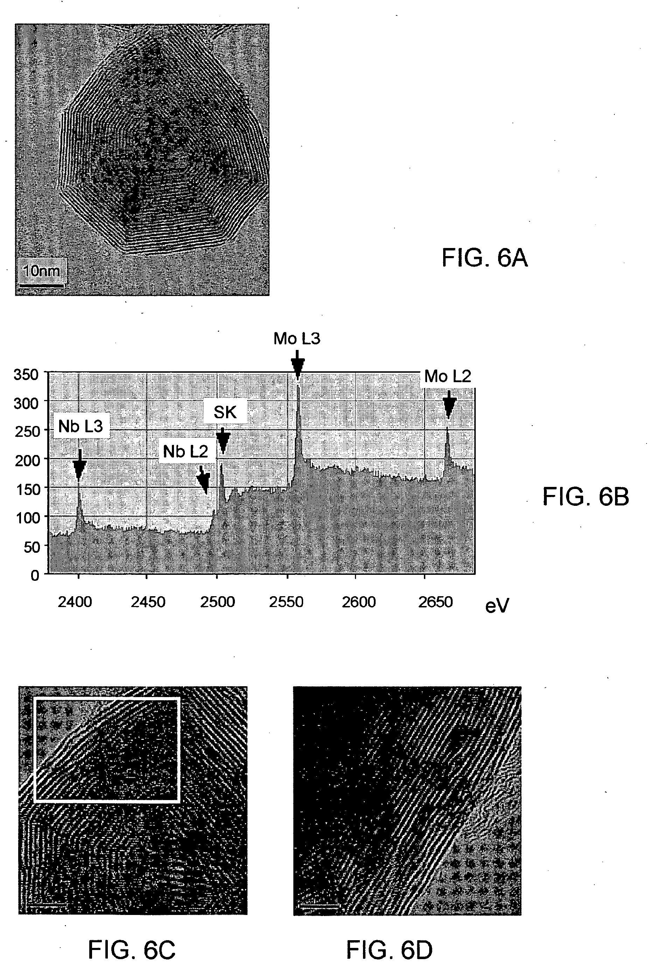

Referring to **Figs. 6A to 6C**, there are shown the HRTEM images (**Fig. 6A**) and the corresponding EELS spectra (**Fig. 6B**) of an individual IF-Mo₁₋ₓNbₓS₂ nanoparticle prepared at T₁ = 850 °C and T₂ =900 °C (series-2), and an exploded view (**Fig. 6C**) of a portion of the nanoparticle of **Fig. 6A**. As shown in **Fig. 6A**, the particle is well faceted with clear and sharp curvatures forming the closed-cage nanoparticle (diameter is ∼ 40 nm, number of layers ∼ 30). The EELS spectrum of **Fig. 6B** shows a good signal-to-noise ratio and very distinct Mo (L_{3,2}), S (K) and Nb (L_{3,2}) peaks. The Mo/Nb ratio was determined by the integration of the Nb-L_{3,2} edge relative to the Mo-L_{3,2} edge, after background subtraction. This gives an atomic ratio of Nb to Mo of about 0.30/1.00 (not according to the invention). The relative concentration of Nb in the Mo-compound in the product, as derived from EELS and from TEM-EDS analysis data, ranges between 15-25 % (not according to the invention). In order to ascertain whether Nb is present as an intercalant, between the MoS₂ walls, or in substitutional sites in the layers of the MoS₂ lattice, additional TEM-EDS and HRTEM-EELS analyses were performed. The results show that the Mo+Nb+S ratio remained nearly constant, independent of the IF nanoparticle diameter and position. The low loss region in the EELS spectra show two characteristic peaks: a plasmon peak at 23.3 ± 0.1 eV, which is shifted to lower energies by 0.2 eV relative to the pure IF-MoS₂ sample (23.5 ± 0.1 eV), and an additional feature at 8.2 ± 0.2 eV. However, this change is too small to be used to differentiate between the two modes of Nb insertion, either in the layers of the host lattice (MoS₂) or as intercalating moiety in-between the MoS₂ layers. As shown in **Fig. 6C****,** which is an enlarged view of a portion of the nanoparticle of **Fig. 6A**, a mismatch in the layers exists. **Fig. 6D****,** which is the HRTEM of another IF nanoparticle, shows defects/dislocations in the layers.

The presence of layers' mismatch, defects and/or dislocations, in the case of the IF-Mo₁₋ₓNbₓS₂ nanoparticles, is another indication for the incorporation of Nb atoms in the lattice of MoS₂. The occurrence of such defects is not surprising considering the difference in coordination of the two metal atoms (trigonal biprism for the Mo and octahedral for the Nb atom). These kinds of defects were very rare in the case of the pure IF-MoS₂ nanoparticles [4a].

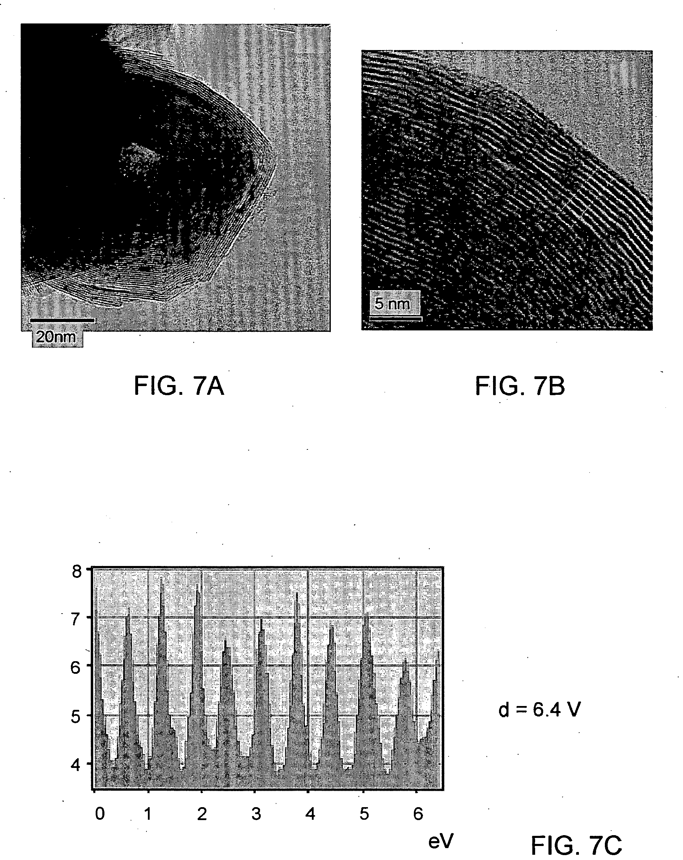

Reference is made to **Figs. 7A to 7C**, where **Fig. 7A** shows the HRTEM image of the IF-Mo₁₋ₓNbₓS₂ nanoparticles prepared at T₁ = 850 °C and T₂ =900 °C (series-2); **Fig. 7B** shows an expanded view of a portion of the particle of **Fig. 7A**; and **Fig. 7C** is a line profile of a framed region in **Fig. 7B****.**

As revealed by the line profile of the framed area in **Fig. 7B****,** the interlayer spacing is 6.40 Å. Although this spacing is observed in some cases (as described with respect to XRD study), this does not seem to be the rule for all the IF-Mo₁₋ₓNbₓS₂ nanoparticles, since some of them exhibit the 6.20 Å spacing which is typical for the pure IF-MoS₂ nanoparticles. The observed expansion in the case of IF-Mo₁₋ₓNbₓS₂ nanoparticles might be too small to be attributed to intercalation of Nb in-between the layers. Previously, alkali metal intercalation of IF-MoS₂ and IF-WS₂ nanoparticles, resulted in a lattice expansion of 2-3 Å [5]. Furthermore, electron diffraction (ED) analysis of individual IF-Mo₁₋ₓNbₓS₂ nanoparticles does not support such intercalation. The diffraction pattern did not reveal any additional spots that may arise due to Nb intercalation.

The above results are also in good agreement with the XRD diffraction data. As mentioned above, NbS₂ may appear in two polytypes, hexagonal-2H (*P63*/*mmc*) and rhombohedral-3R (*R3m*)*.* The XRD data of **Figs. 3** **and** **4** agree well with that of the 2H polytype. Thus, in this case, defects and dislocations in the layers, arising due to the incorporation of Nb in the layers, might be responsible for the observed increase in the layer spacing. Also, the fact that intercalation of IF nanoparticles with e.g. alkali metal atoms was found to be very non-uniform with internal layers of the IF nanoparticles unaffected at all, should be taken into account. The fact that Nb is distributed uniformly in the present IF-Mo₁₋ₓNbₓS₂ nanoparticles indicates that there is much less strain here as compared to the case of alkali metal intercalation in IF nanoparticles. Lattice substitution of Nb into the MoS₂ network is much less energetically demanding than intercalation, which leads to a large expansion in the interlayer distance.

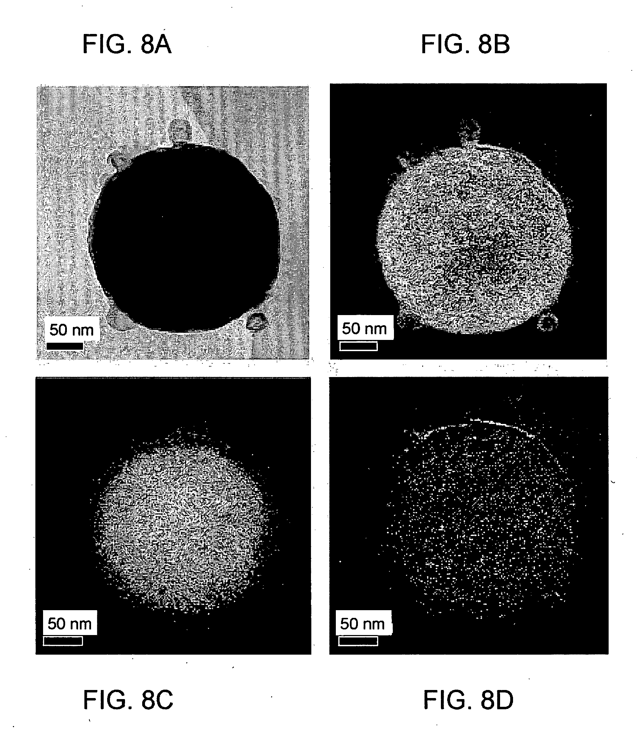

Elemental mapping by energy-filtered TEM (EFTEM) analysis revealed the presence of Nb uniformly throughout the particles. Apart from the uniform Nb substitution into the MoS₂ lattice, there is also a very thin amorphous niobium oxide layer seen as an outer envelope on the IF nanoparticles [7]. In this connection, reference is made to **Figs. 8A to 8D**, showing images of elemental mapping by energy-filtered TEM (EFTEM) of IF-Mo₁₋ₓNbₓS₂ nanoparticle, with a surface oxide layer. **Fig. 8A** shows a zero-loss image; **Fig. 8B** shows the sulfur map measured around the S L_{2,3} edge (167-187eV); **Fig. 8C** shows the niobium map measured around the Nb L₃ edge (2370-2470eV); and **Fig. 8D** shows oxygen map measured around the O K edge (532-562eV), which is indicative of a very thin NbOₓ film covering the IF nanoparticle surface.

The stoichiometry of niobium oxide and the oxidation of niobium metal are of considerable interest, especially in the realm of superconductivity. Niobium oxide is known to exist in three principal forms: Nb₂O₅, NbO₂, and NbO, but several suboxides of the form NbOₓ (x < 1) are also known, and the structure of many of these have been reported. In the present case, however, since the top oxide film is amorphous, it was not possible to ascertain the exact phase of the niobium oxide layer sheathing the IF-Mo₁₋ₓNbₓS₂ nanoparticles. A summary of all the data is presented in **Table 2** below, comparing the 2H-MoS₂ (2H-NbS₂), IF-MoS₂ (IF-NbS₂) and the IF-Mo₁₋ₓNbₓS₂ nanoparticles.

**Table 2**

| **Polytypes** | | **Size** | **Additional information** | |
|---|---|---|---|---|
| | | | **Composition** | **Type** |
| **MoS₂** | hexagonal-2H (P63/mmc) c/2=6.15 A | - | - | - |
| | rhombohedral | | | |
| | -3R = 6.06 A | | | |
| **NbS₂** | hexagonal-2H (P63/mmc) | - | - | - |
| | c/2=5.981 A | | | |
| | rhombohedral | | | |
| | *-3R(R3m)* = 5.96 A | | | |
| **IF-MoS₂^{8a}** | hexagonal-2H (P63/mmc) | ∼ 50 nm | Mo: S | Spherical/Faceted nanoparticles |
| | c/2=6.20 A | | 1 : 2 | |
| **IF-NbS₂^{12d}** | rhombohedral *-3R(R3m)* | 20-40 nm (small particles) | Nb: S | Spherical nanoparticles |
| | c/2 = 6.15 to 5.9 A depending on annealing | 60-80 nm (large particles) | 1 : 2 | |
| **IF-Mo₁₋ₓNbₓS₂** | Hexagonal-2H (P63/mmc) | ∼40-50 nm (90% small particles) | 15-25% Nb (not according to the invention) | Spherical/Faceted nanoparticles |
| | c/2 - 6.40 A | ∼ 200 nm (large particles 10%) | NbO_{%} surface layer | |

Thus, the TEM analysis reveals the presence of well faceted nanoparticles of diameter 40-50 nm. EDS and EELS measurements show the presence of Mo, Nb, S on the same individual nanoparticles, with Nb uniformly distributed over the entire nanoparticle. The concentration of Nb in each of the individual nanoparticles present is ascertained to be around ∼ 15-25 % (not according to the invention) by TEM-EDS and HRTEM-EELS analysis. In some IF nanoparticles the interlayer spacing increases to 6.4 Å due to defects and/or dislocations within the layer arising as a result of Nb incorporation while in others the interlayer spacing remains at 6.2 Å (note that Nb is present uniformly in these IF nanoparticles as well). HRTEM-EELS chemical mapping reveals the presence of Nb distributed uniformly throughout the nanoparticles. The fact that the Nb is distributed randomly in the individual IF-Mo₁₋ₓNbₓS₂ nanoparticle and the absence of any local variations in the chemical composition excludes Nb intercalation as a potential major mechanism for altering the IF-MoS₂ lattice. Thus, Nb is incorporated within the MoS₂ layers. In addition from the EFTEM observations the presence of an oxide layer covering the nanoparticles is observed.

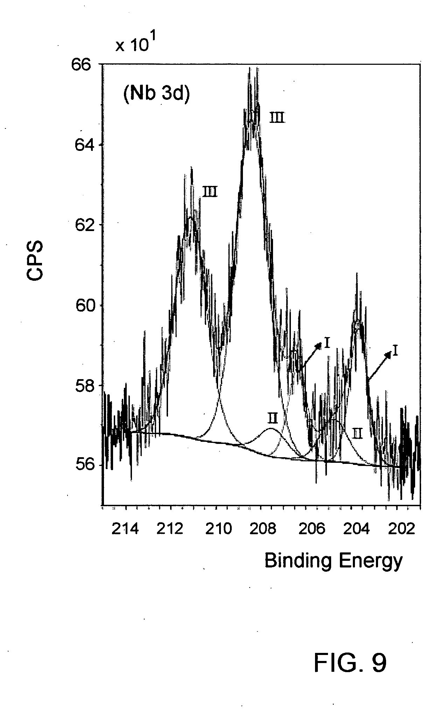

Reference is now made to Table 3 below and **Figs. 9** **and** **10A** - **10C,** presenting the X-ray Photoelectron Spectroscopy (XPS) results. **Table 3** summarizes the XPS data of the IF-Mo₁₋ₓNbₓS₂ nanoparticles (series-2) given as atomic concentration of the different elements.

**Table 3 (not according to the invention)**

| Element | Atomic Concentration (%) |
|---|---|
| Nb^{red} | 0.37 |
| Nb^{ox} | 1.15 |
| Mo | 3.31 |
| S | 7.77 |
| S^{ox} | 0.78 |
| O | 3.15 |
| C | 30.6 |
| Au | 24.81 |

**Fig. 9** illustrates the corresponding Nb 3d spectrum (i.e. line shape analysis of the Nb 3d signal with Gaussian-Lorenzian components. Here, reduced Nb (I and II) is believed to be within the nanoparticles. The oxidized Nb (III) appears on particle surfaces. More specifically: three doublets are shown in the figure; the two low-energy doublets correspond to a reduced Nb moiety, presumably within the dichalcogenide layers, while the high-energy doublet is associated with oxidized (external) Nb (as also revealed by energy filtered TEM). It should be noted that the last entry in Table 3, Au in an atomic concentration of 24.81, relates to Au from the substrate that is not part of the formed IF-Mo₁₋ₓNbₓS₂ nanoparticles. The high surface sensitivity of the XPS technique explains the large concentration of carbon which emanates from surface impurities.

The binding energies of Mo and S exhibit a marked difference when the Nb-substituted and the unsubstituted samples are compared: Mo(3d_{5/2}) at 228.9 and 229.3, respectively, and S(2p_{3/2}) at 161.7 and 162.1, respectively. This is clear evidence for incorporation of Nb into the Mo-based particles. The observed difference, which is practically identical for the Mo and S lines, 400 ± 100 meV, is far beyond any possible charging effect (as will be described below with respect to CREM data). Also, it does not show up at the gold and carbon signals (and has a different magnitude for the oxygen). These findings indicate that this binding energy difference is associated with a Fermi level shift. Thus, the Fermi level of the Nb-substituted nanoparticles (IF-Mo₁₋ₓNbₓS₂) is shifted towards lower energies, making them more 'p-type'.

A unique way to test the electrical properties of the nanoparticles is provided by the known technique of chemically resolved electrical measurements (CREM), which is a "top-contact-free" electrical characterization method. This technique allows for the determination of the electrical response of the different nanoparticles. By measuring the current flow to the ground and monitoring the energy shift of a given element in the surface layer during electron bombardment by a flood gun, the internal potential drop in the layer which contains this specific element can be determined.

**Figs. 10A-10C** show electrically induced line shifts of Nb(3d) (**Fig. 10A**), Mo (3d_{5/2}) in IF-Mo₁₋ₓNbₓS₂ nanoparticles **(****Fig. 10B****),** and Mo (3d_{5/2}) in IF-MoS₂ nanoparticles **(****Fig. 10C****)** under a given electrical input signal (eFG filament current of 1.75 A). The line shifts reflect the local potential changes at addresses associated with the inspected chemical element. In all panels, curve (I) corresponds to 'eFG off conditions and curve (II) refers to 'eFG on'. It should be noted that the oxidized Nb exhibits a large shift while the reduced Nb signal is practically not shifted at all. Comparison of **Figs. 10B** and **10C** demonstrate the effect of Nb substitution on the Mo line shift, indicating improved conductance in the IF-Mo₁₋ₓNbₓS₂ nanoparticles. This experiment is conducted with the nanoparticles deposited on a gold substrate, and complementary CREM data (not shown) is recorded also for the gold, carbon and oxygen signals. All gold substrates exhibited small electron-beam induced shift of the XPS signal, signifying a relatively good Ohmic back contact.

The film of the IF-MoS₂ nanoparticles exhibits measurable line shifts upon electron irradiation with the eFG (Mo line in **Fig. 10C**). This line shift directly reflects a local potential change, due to the internal resistance of the nanoparticle (under the incident electron flux). The internal resistance of the nanoparticle is estimated to be on the order of a few hundred k Ohms. In contrast, the Mo line of the IF-Mo₁₋ₓNbₓS₂ nanoparticles does not show any observable line shift (**Fig**. **10B**), indicating that the nanoparticle resistance is low, such that only small, undetectable potential changes can evolve under the applied electrical signal (the input eFG current). Interestingly, the Nb line itself consists of two electrically different components (**Fig. 10A**). As mentioned above, the low binding energy components (203.70 eV and 204.80 eV) are attributed to atoms incorporated within the Mo-based particles, and they do not shift under the input flux of the electrons. The other component (at 208.40 eV), which is associated with external oxidized Nb species, does exhibit a strong line shift under the electron flux (**Fig. 10A**). This shift is similar in magnitude to that of the oxygen line (not shown). Based on complementary data (EFTEM described above), the oxidized Nb appears to comprise a subnanometer coating on the nanoparticle surface. This means that contact electrical measurements (e.g. with AFM, as will be described below) might be subjected to an oxide barrier, which is not the case for the non-contact CREM approach.

Finally, the CREM results are in good agreement with the observation of XPS-derived Fermi level shift upon Nb-substitution, which is manifested through the shift of the Mo and S lines to lower energies in the Nb substituted (alloyed) IF nanoparticles. The incorporation of Nb into the semiconducting IF-MoS₂ nanoparticles induces enhanced p-type behavior, where the Fermi level shifts down towards the valence band, and the electrical conductance increases accordingly.

Thus, the XPS analysis shows two low binding-energy doublets corresponding to reduced Nb moieties, presumably within the dichalcogenide layers, and a high-energy doublet associated with oxidized Nb, which is present on the surface (from complementary analysis, as also revealed by energy filtered TEM). One of these reduced species corresponds to the sheets of NbS₂, while the other one to alternate substitutional sites of individual Nb atoms at Mo atomic sites.

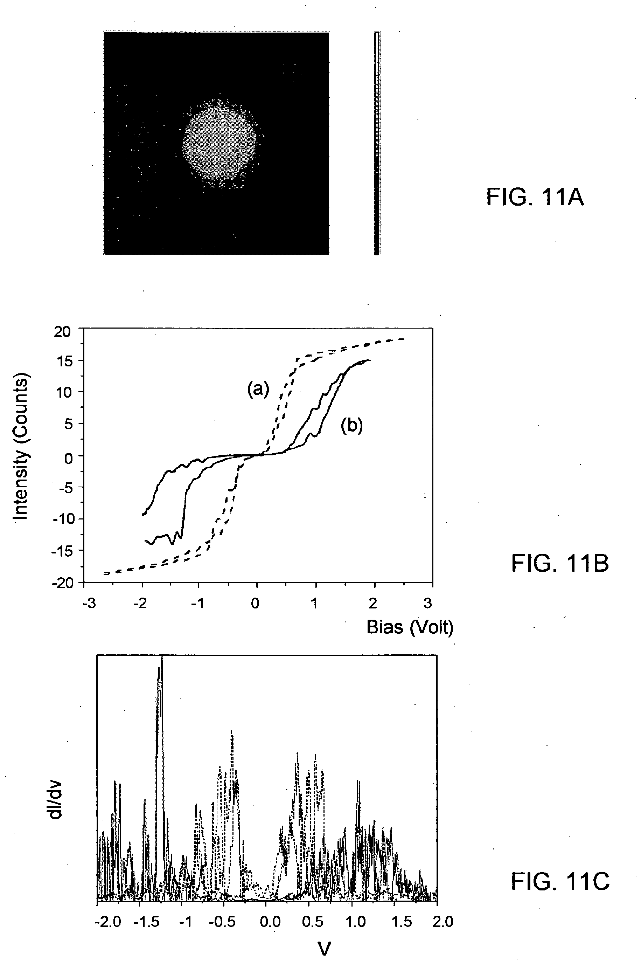

Reference is made to **Figs. 11A-11C****,** showing the results of conducting atomic force microscopy measurement (c-AFM) measurements carried out on an individual IF-Mo₁₋ₓNbₓS₂ nanoparticle (series-2), and also AFM measurements carried out on IF-MoS₂ nanoparticles for comparison. **Fig. 11A** shows the AFM image of the IF-Mo₁₋ₓNbₓS₂ nanoparticle (series-2), **Fig. 11B** shows I/V curves, and **Fig. 11C** shows corresponding dI/dV vs V plots. In **Figs. 11B** and **11C****,** the corresponding plots of the IF-MoS₂ nanoparticle are shown for comparison (solid lines).

Whereas the IF-MoS₂ nanoparticle exhibits a noticeable bandgap region where no current flows, the IF-Mo₁₋ₓNbₓS₂ nanoparticles exhibit only an inflection in the curve where current is reduced, but not to zero. Furthermore, the current rise is significantly sharper for the IF-Mo₁₋ₓNbₓS₂ nanoparticles. Calculated dI/dV vs V traces of the curves in Fig. 10B, are shown in Fig. 10C. From these curves, the effective bandgap was measured. In both cases, the distribution is quite broad, representing both variations between the different particles, and experimental fluctuations. An average bandgap of ∼ 1.05 eV (± 0.2 eV) was estimated for a canonical ensemble of the IF-MoS₂ nanoparticles. This result are indicative of that the IF-MoS₂ nanoparticles are semiconductors. The band gap of the bulk 2H-MoS₂ phase is 1.2 eV. The somewhat smaller gap of the nanoparticles, compared with the values of the bulk phase, may be attributed to the expansion of c/2 (vdW gap) in various regions of the nanoparticles, due to the strain involved in the folding of the structure. An alternative explanation for the reduced gap of the nanoparticles is that sub-bandgap states, which emanate from structural imperfections or edge dislocations, may serve as mediators for tunneling of charge and hence increase the current under bias. In contrast to the IF-MoS₂ nanoparticles, the IF-Mo₁₋ₓNbₓS₂ exhibits a metallic character. A minority of the particles measured (15 %) showed an apparent gap of up to 0.6 eV which indicates the presence of an additional barrier in the tunneling gap. This is provided by the sheathed amorphous niobium oxide layer observed in the TEM measurements. It is possible that this layer is disrupted and penetrated by the tip in most measurements.

The experimental I/V curves can be further analyzed to derive the effective resistance. The values were determined over a 0.3 V bias range starting directly after the current rises above the noise level. After accounting for the intrinsic point contact resistance of the tip as measured on the clean Au surfaces, the IF-Mo₁₋ₓNbₓS₂ nanoparticles have resistance of 10 MOhm, as opposed to 60 MOhm for the undoped IF-MoS₂. Considering the existence of an oxide layer in some of the particles examined by TEM, part of this resistance is mediated by the quality of the contact.

Thus, the technique of the present invention provides for modifying the electronic properties of the nanostructures. The effect of Mo → Nb substitution on the electronic structure of MoS₂ nanotubes (not fullerene-like nanoparticles though) has been investigated using density functional tight binding method (DFTB) [6]. The Mo → Nb substitution leads to the formation of new states in the band gap of MoS₂ nanotubes. With increasing Nb content (i.e. with decreasing number of electrons in comparison with "pure" MoS₂), the Fermi level is shifted, and correspondingly the density of states (DOS) near the Fermi energy is increased, consistent with the present XPS and CREM data. As a consequence, the DOS close to the Fermi level of Nb-substituted MoS₂ can be tuned over a wide range, by the degree of substitution. Also the IF-Mo₁₋ₓNbₓS₂ nanoparticles exhibit metallic character, independent of the substitution patterns of the Nb atoms.

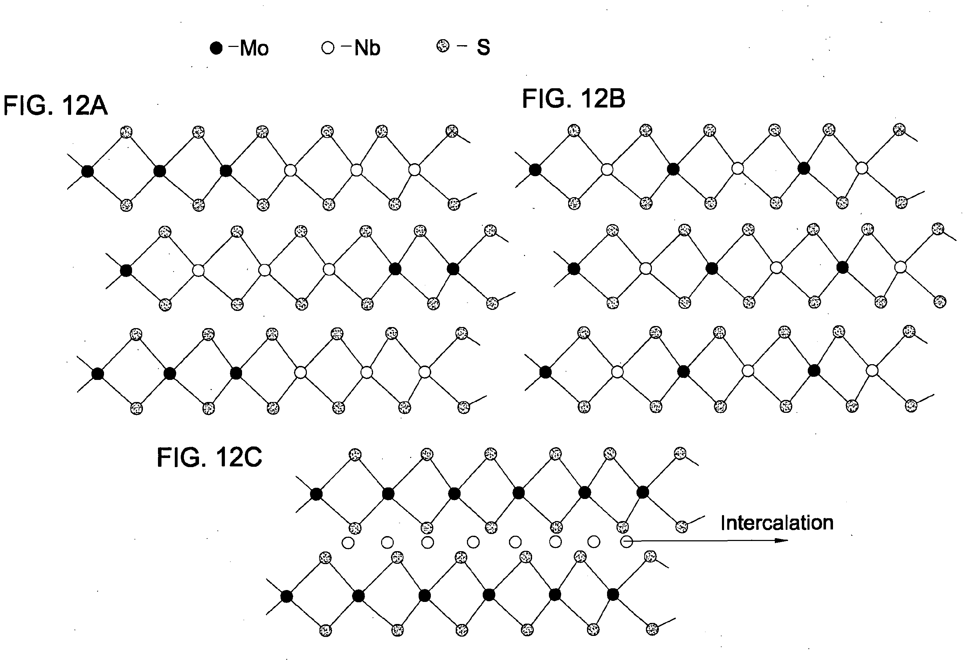

Referring to **Figs. 12A to 12C****,** there are shown substitutional patterns of the Nb atoms within the IF-Mo₁₋ₓNbₓS₂ lattice, presenting three types of Nb incorporation within the lattice of MoS₂ based on the above described analysis of X-ray diffraction data, and TEM and XPS analysis. **Fig. 12A** represents the case where there are continuous spreads of both types of atoms within each layer alternating randomly (turbostatically). In **Fig. 12B****,** Mo and Nb atoms are alternately incorporated into the lattice of MoS₂. It should be noted that if the concentration of the Nb atoms goes below 1% (or generally, does not exceed 1%), these atoms will generally prefer to be spread as individual atoms in the Mo-dominated lattice. In this case, the physical properties of the MoS₂ lattice, like the energy gap, are preserved. In this case the Nb atoms behave like a classical (hole) dopant making the lattice p-type. This situation provides the best conditions for the control of the electrical properties of the lattice, from intrinsic (undoped) to the case where as much as 10²⁰ cm⁻³ Nb atoms are substituted into the Mo sites, making it a heavily doped hole (p-type) conductor. **Fig. 12C** shows the unlikely case of intercalation of atoms in the van der Waals gap between the layers. The Nb incorporation could be a combination of the first two types.

The two kinds of Nb species could have a different effect on the electronic properties of the IF-Mo₁₋ₓNbₓS₂ nanoparticles. Individual Nb atoms in substitutional sites could play the role of a dopant, leading to a downwards shift of the Fermi level closer to the valence band and increased conductivity. Patches of NbS₂ sheets interspersed in the MoS₂ lattice impose a metallic character on the nanoparticle. The apparent 'soft gap', manifested by the reduced (but not totally suppressed) current around zero bias, as measured by conductive AFM, could be also influenced by the size of the nanoparticles, with the larger nanoparticles exhibiting larger gap [11]. Hence, the Nb incorporation into the 2H-MoS₂ lattice of the IF reduces the resistivity of the nanoparticle substantially.

Thus, the present invention provides novel IF-nanostructures, generally of the formula A₁₋ₓ-Bₓ-chalcognide, where A is a metal or transition metal doped by another metal or transition metal B different from A, and x≤0.3. In the above described not-limiting example, IF-Mo₁₋ₓNbₓS₂ nanoparticles have been prepared starting from the respective chloride vapor precursors in addition with H₂S. The IF-Mo₁₋ₓNbₓS₂ nanoparticles have been extensively characterized by XRD, TEM-EDS, HRTEM-EELS and XPS. From the detailed investigation of the electrical properties by AFM analysis, the substitution of Nb for Mo involves a semiconductor to metallic type transformation (IF-MoS₂ are known to be semiconductors). This study is an example of heteroatom substitution in the case of IF-nanoparticles opening up a wide range of possibilities including varying the electronic behavior of the IF-nanoparticles, in superconductivity and in spintronics.

### Example 2 - Synthesis of Mo₁₋ₓReₓS₂ IF-nanoparticles

The synthesis was carried out in a method similar to the above-described synthesis of the IF-Mo₁₋ₓNbₓS₂ nanoparticles. The precursors in this case are MoCl₅ (m.pt = 194 °C; b.pt = 268 °C) and ReCl₅ (m.pt = 220 °C).

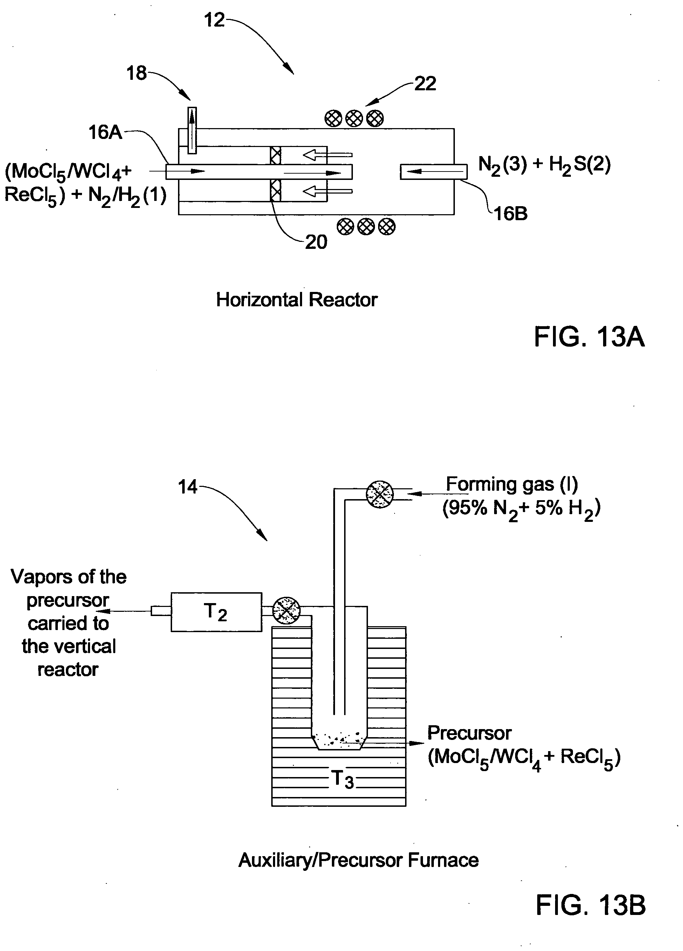

**Figs. 13A and 13B** show together an experimental setup used in the present example. Reference numbers are the same as those used in Figure 2. Initially, the precursors were heated (temperature T₃) in a separate auxiliary furnace **14 (****Fig. 13B****)** and the respective vapors were carried while heated at a temperature T₂ into the main reactor **12 (****Fig. 13A****).** The latter being a horizontal reactor, although one may carry the reaction in a vertical reactor similar to that described previously in the case of the synthesis of IF-Mo₁₋ₓNbₓS₂ nanoparticles, with reference of **Fig. 2****.** As for the horizontal reactor, which was previously used for the synthesis of IF-TiS₂ nanoparticles, it now has been modified for the synthesis of the IF-Mo₁₋ₓReₓS₂ nanoparticles and nanotubes. The MoCl₅ and ReCl₅ vapors were initially formed from the respective solid material at the auxiliary/precursor furnace **14 (****Fig. 13B****).** The temperature of the precursor source was kept usually between 220°C and 250°C which is close to the boiling point of the chlorides. The formed vapors were introduced into the main reactor **12 (****Fig. 13A****)** through inlet **16A** by a carrier gas flow (N₂/H₂). The H₂S gas diluted with N₂ were provided from opposite directions through inlet **16B** of the reactor **12** respectively. This enables the reaction to occur in the central hot region of the reactor (associated with a respective furnace), while the product is swept by the flow and collected onto the filter (as described above with reference to Fig. 2). Excess gas leaves the reactor through the opening **18.**

The preheating temperature was found to be an important factor determining the amount of precursor supplied to the reaction. The flow-rate of nitrogen through the bottle (10-100 cc/min) affects the stream of the tungsten chloride precursors as well. A small overpressure (1.1 bar) was maintained by using a toxic gas trap filled with NaOH (5%) solution in the gas outlet of the reactor. The temperature of the reaction chamber, where the two gases (MoCl₅ and H₂S) mix and react, was varied in the range of 800-900 °C. The resulting Mo₁₋ₓ ReₓS₂ powder was collected using a filter. Unlike the case of TiS₂ synthesized previously, by the use of the modified horizontal reactor and by collecting the product in the filter, the main portion of the product could be collected without losses, and was not swept away by the carrier gas to the trap. The flow-rate of H₂S (5-10 cc/min) was controlled by means of a TYLAN model FC260 mass flow controller. The H₂S was diluted by mixing this gas with a stream of N₂ gas (10-200 cc/min in this reaction) using another flow-controller.

**Table 4** below shows the parameters and conditions of the reactions carried out for the synthesis of the IF-Mo₁₋ₓReₓS₂ nanoparticles.

**Table 4**

| **Temperature of the horizontal reactor** | **Temperature of the auxiliary furnace** | **Gas flow rates** | **Size of the IF-Mo₁₋ₓReₓS₂ nanoparticles** |
|---|---|---|---|
| **Series-1** | | **Forming gas** | **∼30 - 80 nm** |
| **T₁ = 800° C** | **T₂ = 220° C** | **(I)=50 cc (95% N₂ and 5% H₂)** | |
| | **T₃ = 250° C** | | |
| | | **H₂S(II)=5 cc** | |
| | | **N₂ (III)=50 cc** | |
| **Series-2** | | **Forming gas** | **50-80 nm** |
| **T₁ = 850° C** | **T₂ = 220° C** | **(I)=50 cc (95% N₂ and 5% H₂)** | |
| | **T₃ = 250° C** | | |
| | | **H₂S(II)=5 cc** | |
| | | **N₂ (III)=50 cc** | |
| **Series-3** | | **Forming gas** | |
| **T₁ = 900° C** | **T₂ = 220° C** | **(I)=50 cc (95% N₂ and 5% H₂)** | |
| | **T₃ = 250° C** | | **50-100 nm** |
| | | **H₂S(II)=5 cc** | **IF nanoparticles + nanotubes** |
| | | **N₂ (III)=50 cc** | |

IF-Mo₁₋ₓReₓS₂ nanoparticles synthesized at 800 °C (Table 4, Series-1) resulted in both spherical and well-faceted nanoparticles of approximately 30 to 80 nm in diameter and interlayer spacing of approximately 0.62nm. TEM-energy dispersive X-ray spectroscopy (EDS) and high resolution TEM-electron energy loss spectroscopy (HRTEM-EELS) analysis reveal the presence of Re in the nanoparticles.

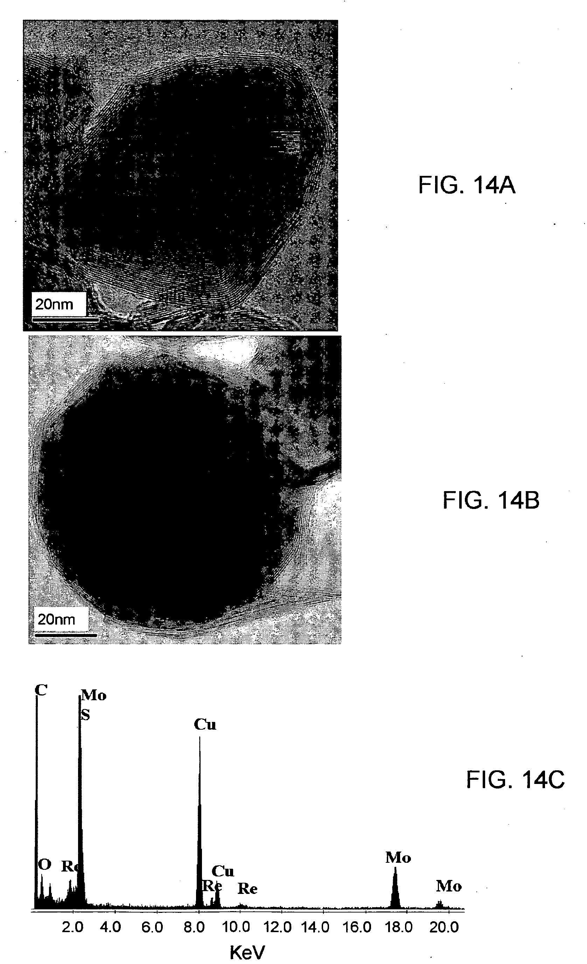

The HRTEM images of the IF-Mo₁₋ₓReₓS₂ nanoparticles synthesized at 850 °C (Table 4, Series-2) are shown in **Figures 14A** and **14B****.** The diameter of the IF-Mo₁₋ₓReₓS₂ nanoparticles is in the range of 50-80 nm in diameter. The EDS spectra of the IF-Mo₁₋ₓReₓS₂ nanoparticle shown in **Figure 14B** is presented in **Figure 14C****.** Rhenium atoms seem to be uniformly distributed in all the examined nanoparticles, irrespective of their size or shape. The presence of the characteristic and distinct Mo (K,L), S (K) and Re (M,L) lines can be clearly seen. From the TEM-EDS and the HRTEM-EELS analysis the metal to sulphur ratio is determined to be 1:2. The stoichiometry of the IF-Mo₁₋ₓReₓS₂ nanoparticles is as follows: Mo:Re:S - 0.97 (± 0.01) : 0.03 (± 0.01) : 2 (not according to the invention). Additional TEM-EDS and HRTEM-EELS analyses show that the Mo+Re+S ratio remained nearly constant, independent of the IF nanoparticle diameter and position.

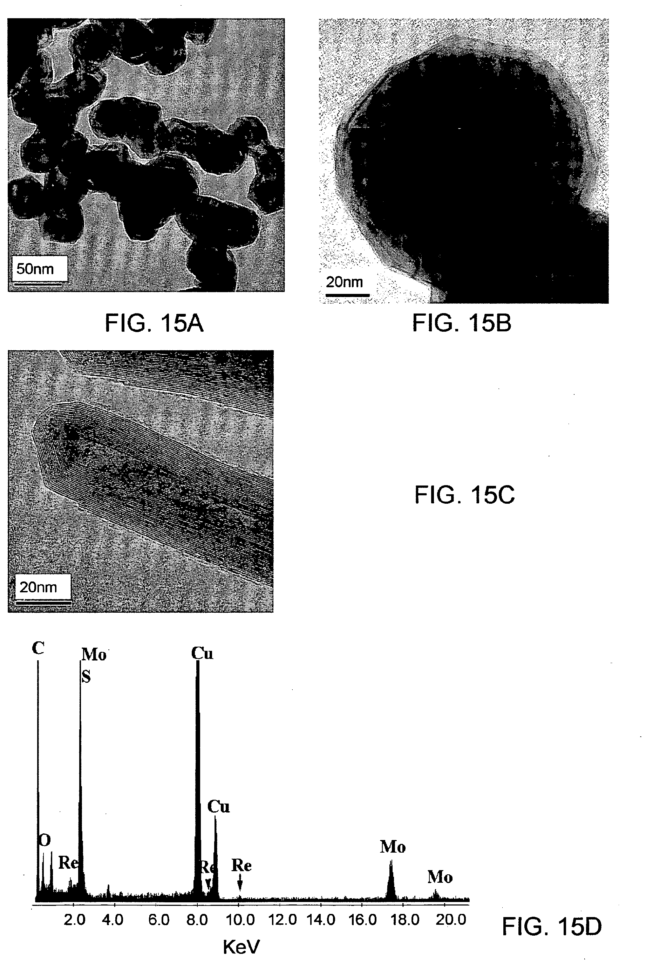

**Figure 15A** shows a TEM image of a collection of the IF-Mo₁₋ₓReₓS₂ nanoparticles synthesized at 900°C (Table 4, Series-3). **Figure 15B** shows the HRTEM image of a single nanoparticle. The diameter of the nanoparticles is between 50-100 nm at this temperature of synthesis. The presence of Re is ascertained from the EDS analysis carried out on individual as well as a collection of IF-Mo₁₋ₓReₓS₂ nanoparticles (Figure **15D**). The presence of the characteristic and distinct Mo (K,L), S (K) and Re (M,L) lines can be clearly seen from the EDS spectra. Apart from obtaining IF-Mo₁₋ₓReₓS₂ nanoparticles, nanotubes of Re-doped MoS₂ were also obtained at 900 °C (Table 4, Series-3). The nanotubes come in small amounts (∼ 5 %). **Figure 15C** shows the HRTEM image of one such nanotube. The length of the nanotubes thus obtained is about half a micron, whereas the diameter is about ∼ 40 nm (∼ 25 layers). The interlayer spacing of the nanotube shown in Figure **15C** is ∼ 0.62 nm, which is very similar to that of pure IF-MoS₂ [2-4]. The EELS spectra of nanoparticles and nanotubes showed the characteristic Mo (L_{3,2}), S (K) and Re (M_{4,5}) signals and the amount of Re in the particles was about 1-2 atomic percent. Higher temperatures of synthesis were found to be suitable for the production of the nanotubes. This observation was similar to the synthesis of pure MoS₂ and WS₂ nanotubes wherein higher temperatures of synthesis (∼ 900 °C) favoured their formation [4].

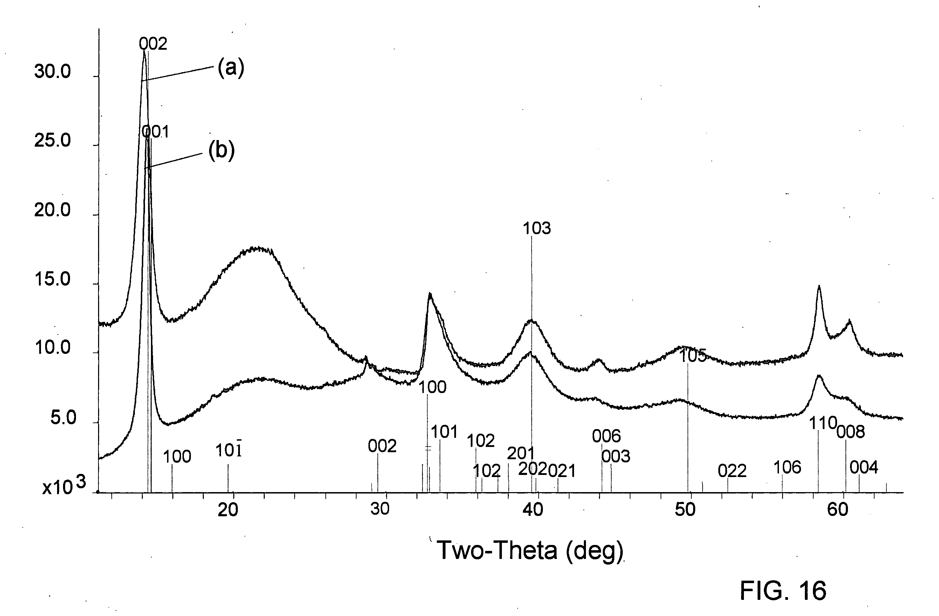

**Figure 16** shows the XRD pattern of the IF-Mo₁₋ₓReₓS₂ nanoparticles synthesized at 850°C (Table 4, series-2,) and at 900°C (Table 4 series-3). The standard diffraction patterns of 2H-MoS₂, 2H-ReS₂ are also shown in the figure for comparison. It can be seen that all the peaks of the sample match well with those of 2H-MoS₂. The (002) peak in the XRD pattern was characterized by a shift to a lower angle as compared to the (002) peak in hexagonal 2H-MoS₂ crystals indicating a small lattice expansion in the case of the IF nanoparticles and nanotubes [2-4]. This expansion has been attributed to the introduction of strain owing to curvature of the layers [1-4]. Comparison of the full width at half maximum of the (002) peaks (**Figure 16**) confirm the TEM data that the size of the nanoparticles obtained at 900 °C is larger than those nanoparticles obtained at 850 °C. Any secondary phases of ReS₂ have been ruled out from the XRD pattern. However the presence of a small proportion of ReO₃ and MoO₂ is present as can be seen in the figure. This is in accordance with the TEM observations wherein it is seen that the core of some of the nanoparticles reveal the presence of an oxide ReO₂ and ReO₃ that may undergo sulfidization). **Table 5,** summarizes the XPS derived atomic concentrations of the IF-Mo₁₋ₓReₓS₂ nanoparticles (Table 4, series-3).

**Table 5: XPS-derived compositions of the IF-Mo₁₋ₓReₓS₂ nanoparticles (Series 3 =, Table 4) given in atomic percentages (not according to the invention).**

| Element | Atomic Concentration [%] |
|---|---|
| Re | 0.02 |
| Mo | 2.98 |
| S | 5.78 |
| O | 37.55 |
| C | 28.50 |
| Si | 21.98 |

The characteristic Re (4f) signal is clearly seen along with that of Mo (3d_{5/2}) and S (2p_{3/2}) in the spectra, however its quantity (∼ 1 %), is of a relatively large uncertainty, due to the neighbouring Mo (3p) signal. The values in Table 5 is an average over a number of experiments (10 experiments) and is in accordance with the atomic percentage of Re obtained with HRTEM-EELS.

The binding energies of Mo and S exhibit a marked difference when the Resubstituted and the unsubstituted IF samples are compared. This is a clear evidence for the incorporation of Re into the Mo-based particles. The observed difference, is practically identical for the Mo and S lines, Δ = 200 ± 100 meV, and is verified to be beyond any possible charging effect. In these experiments, the charging conditions of the sample were changed systematically by varying the flux of the electron flood gun. Additionally, reference lines like that of the gold substrate and the carbon contamination do not show the relative shifts in the binding energy. It is therefore concluded that the Δ shift arises from the Re incorporation into the lattice which raises the E_{F} upwards, thus making the nanoparticles more n-type.

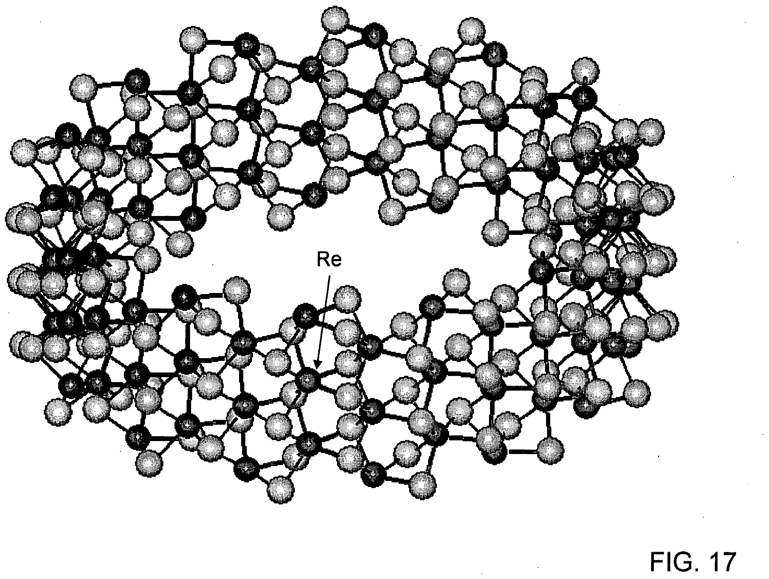

Turning to **Fig. 17****,** the figure demonstrates schematically a possible MoS₂ nanoparticle having a Re atom incorporated therein.

### Example 3: Synthesis of W₁₋ₓReₓS₂] IF-nanoparticles

The synthesis was carried out in a method and an apparatus similar to the above-described synthesis of the IF-Mo₁₋ₓReₓS₂ nanoparticles. The precursors in this case are WCl₄ (m.pt = 300°C) and ReCl₅ (m.pt = 220°C).

The temperature of the precursor source was kept usually between 275°C and 325°C which is close to the boiling point of the chlorides. The preheating temperature was found to be an important factor determining the amount of precursor supplied to the reaction. **Table 6** shows details of the reactions carried out for the synthesis of the IF-W₁₋ₓReₓS₂ nanoparticles.

**Table 6:**

| **Temp of horizontal reactor** | **Temp of the auxiliary furnace** | **Gas flow rates** | **Size of the IF-W₁₋ₓReₓS₂ nanoparticles** |
|---|---|---|---|
| **Series-1** | **T₂ = 300°C** | **Forming gas (I) = 100cc(95% N₂ + 5% H₂)** | **∼ 100 nm** |
| **T₁ = 850°C** | **T₃ = 325°C** | | |
| | | **H₂S(2) = 10cc** | |
| | | **N₂(3) = 50cc** | |
| **Series-2** | **T₂ = 300°C** | **Forming gas (I) = 100cc(95% N₂ + 5% H₂)** | **50-75 nm** |
| **T₁ = 900°C** | **T₃ = 325°C** | | |
| | | **H₂S(2) = 10cc** | |
| | | **N₂(3) = 50cc** | |

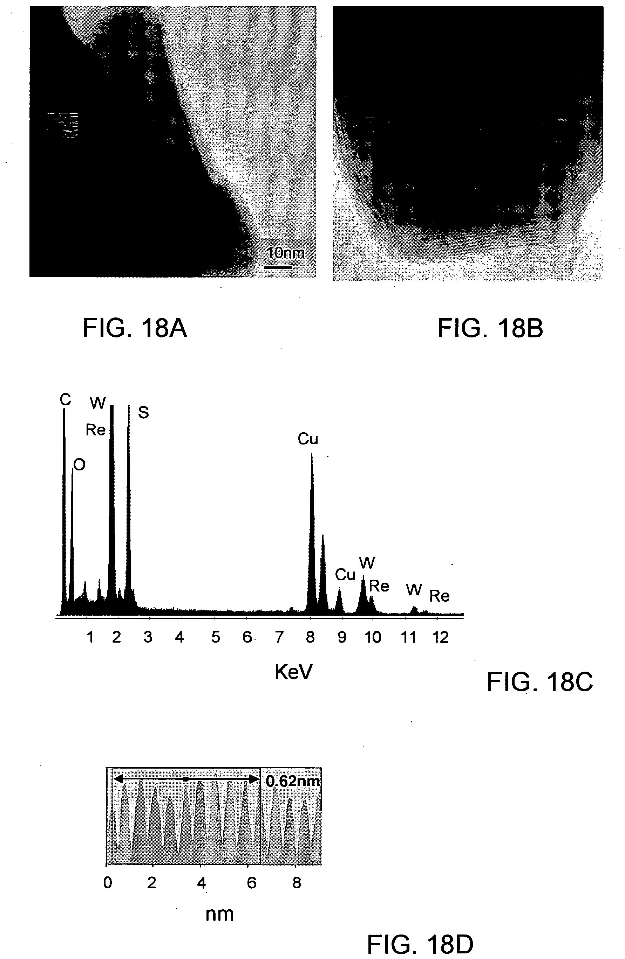

Shown in **Figures 18A, 18B** are the HRTEM images of IF-W₁₋ₓReₓS₂ nanoparticles synthesized at 900°C (Table 6, Series-2). The diameter of the IF-W₁₋ₓReₓS₂ nanoparticles is found to be in between 50-75 nm in this set of experimental conditions. The nanoparticle in **Figure 18A** is well-elongated whereas the nanoparticle in **Figure 18B** is clearly faceted- the differences arising from different temperatures (above 850°C). The interlayer spacing of the particle is found to be 0.62 nm as shown by the line profile in **Figure 18D** (inset). The similarity to the value of the interlayer spacing of pure IF-WS₂ suggests that here again the Re is present in lower percentages. The presence of Re is confirmed by TEM-EDS analysis. Shown as an inset in Figure **18C** is the EDS spectrum revealing the characteristic W(L,M), Re(L,M) and S(K) lines. The composition as ascertained from TEM-EDS analysis is found to be as follows: W:Re:S - 0.97 (± 0.01) : 0.03 (± 0.01) : 2.

In the present case both XRD and HRTEM indicate that Re is present as a dopant in the lattice (for both MoS₂ and WS₂) and not as an intercalant since the presence of Re as an intercalant would result in an additional lattice expansion in the spacing of the (002) layers [1,5].

## Claims

1. Inorganic Fullerene-like (IF) nanoparticles of the formula A₁₋ₓ-Bₓ-chalcogenide, wherein B is incorporated within the A₁₋ₓ-chalcogenide, A being a metal or transition metal or an alloy of metals and/or transition metals, B being a metal or transition metal, and x being 0.001<x<0.01; provided that A≠B, wherein A-chalcogenide and B-chalcogenide crystallize in a dissimilar lattice habit, wherein said B metal atom substitutes said metal A in the original lattice, wherein A includes at least one of Mo, W, Re, Ti, Zr, Hf, Nb, Ta, In, Ga, WMo, and TiW, wherein B is selected from, Nb, Ta, W, Mo, Sc, Y, La, Hf, Ir, Mn, Re, V, Au, Rh, Pd, Cr, Co, Fe, and Ni, and wherein the A₁₋ₓ-chalcogenide is a semiconductor of a certain electrical conductivity and the IF-nanoparticle of the formula A₁₋ₓ-Bₓ-chalcogenide has a higher electrical conductivity that is controllable by doping with B.

2. The IF nanoparticles of claim 1, wherein said chalcogenide is selected from S, Se, and Te.

3. The IF nanoparticles according to claim 1, wherein atoms of metal or transition metal B being incorporated within the A₁₋ₓ-chalcogenide are doped uniformly within said A₁₋ₓ-chalcogenide.

4. The IF nanoparticles according to claim 1, having at least one of the following configurations: being well faceted nanoparticles; comprising continuous spread of atoms of the A and B compounds alternating randomly within each layer; and comprising atoms of the A and B compounds alternately incorporated into the lattice of A₁₋ₓ -chalcogenide.

5. The IF nanoparticles according to claim 1, wherein said nanoparticles are MoS₂ or WS₂ doped by Nb or Re.

6. A process for the manufacture of Fullerene-like (IF) nanoparticles of the formula A₁₋ₓBₓ-chalcogenide wherein A is at least one of Mo, W, Re, Ti, Zr, Hf, Nb, Ta, In, Ga, WMo, and TiW; B is selected from Nb, Ta, W, Mo, Sc, Y, La, Hf, Ir, Mn, Re, V, Au, Rh, Pd, Cr, Co, Fe, and Ni; and wherein 0.001<x<0.01, provided that within said nanoparticle A≠B; and having B and B-chalcogenide incorporated within the A₁₋ₓ-chalcogenide, wherein said B metal atom substitutes said metal A in the original lattice, and wherein A-chalcogenide and B-chalcogenide crystallize in a dissimilar lattice habit; and wherein the A₁₋ₓ-chalcogenide is a semiconductor of a certain electrical conductivity and the IF-nanoparticle of the formula A₁₋ₓ-Bₓ-chalcogenide has a higher electrical conductivity that is controllable by doping with B; the process comprising:
providing A-Y₁ and B-Y₂ compositions each in vapor phase, Y₁ and Y₂ being the same or different halogens selected from chlorine, bromine or iodine; and
flowing said A-Y₁ and B-Y₂ vapors together with a reducing agent carrying forming gas into a reaction chamber where they meet an opposite direction flow of a chalcogenide carrying reacting gas, thereby causing occurrence of reduction of the A and B metals or transition metals, followed by a reaction with the chalcogenide carrying reacting gas, resulting in the formation of said nanoparticles.

7. The process according to claim 6, wherein the provision of the A-Y₁ and B-Y₂ compositions in vapor phase comprises one of the following: evaporating A-Y₁ and B-Y₂ compositions in a chamber separate from said reaction chamber; or evaporating A-Y₁ and B-Y₂ compositions in two chambers, respectively, separate from said reaction chamber.

## Patentansprüche

1. Anorganische fullerenartige (IF) Nanopartikel der Formel A₁₋ₓ-Bₓ-Chalkogenid, wobei B in das A₁₋ₓ-Chalkogenid eingebunden ist, A ein Metall oder Übergangsmetall oder eine Legierung von Metallen und/oder Übergangsmetallen ist, B ein Metall oder Übergangsmetall ist und für x 0,001<x<0,01 gilt; vorausgesetzt, dass A≠B, wobei A-Chalkogenid und B-Chalkogenid in einem unähnlichen Gitterhabitus kristallisieren, wobei das B-Metallatom das Metall A im ursprünglichen Gitter substituiert, wobei A mindestens eins von Mo, W, Re, Ti, Zr, Hf, Nb, Ta, In, Ga, WMo und TiW aufweist, wobei B von Nb, Ta, W, Mo, Sc, Y, La, Hf, Ir, Mn, Re, V, Au, Rh, Pd, Cr, Co, Fe und Ni ausgewählt ist, und wobei das A₁₋ₓ-Chalkogenid ein Halbleiter einer bestimmten elektrischen Leitfähigkeit ist und das IF-Nanopartikel der Formel A₁₋ₓ-Bₓ-Chalkogenid eine höhere elektrische Leitfähigkeit hat, die durch Dotieren mit B steuerbar ist.

2. IF-Nanopartikel nach Anspruch 1, wobei das Chalkogenid von S, Se und Te ausgewählt ist.

3. IF-Nanopartikel nach Anspruch 1, wobei Atome des Metalls oder Übergangsmetalls B, die in das A₁₋ₓ-Chalkogenid eingebunden sind, einheitlich innerhalb des A₁₋ₓ-Chalkogenids dotiert sind.

4. IF-Nanopartikel nach Anspruch 1 mit mindestens einer der folgenden Konfigurationen:
Vorliegen als gut facettierte Nanopartikel; Umfassen einer durchgehenden Ausbreitung von Atomen der Verbindungen A und B, die sich in jeder Schicht statistisch abwechseln; und Umfassen von Atomen der Verbindungen A und B, die abwechselnd in das Gitter von A₁₋ₓ-Chalkogenid eingebunden sind.

5. IF-Nanopartikel nach Anspruch 1, wobei die Nanopartikel MoS₂ oder WS₂ sind, die mit Nb oder Re dotiert sind.

6. Prozess zum Herstellen von fullerenartigen (IF) Nanopartikeln der Formel A₁₋ₓBₓ-Chalkogenid, wobei A mindestens eins von Mo, W, Re, Ti, Zr, Hf, Nb, Ta, In, Ga, WMo und TiW ist; B von Nb, Ta, W, Mo, Sc, Y, La, Hf, Ir, Mn, Re, V, Au, Rh, Pd, Cr, Co, Fe und Ni ausgewählt ist; und wobei 0,001<x<0,01 ist, vorausgesetzt, dass innerhalb des Nanopartikels A≠B ist; und B und B-Chalkogenid in A₁₋ₓ-Chalkogenid eingebunden sind, wobei das Metallatom B das Metall A in dem ursprünglichen Gitter substituiert, und wobei A-Chalkogenid und B-Chalkogenid in einem unähnlichen Gitterhabitus kristallisieren; und wobei das A₁₋ₓ-Chalkogenid ein Halbleiter einer bestimmten elektrischen Leitfähigkeit ist und das IF-Nanopartikel der Formel A₁₋ₓ-Bₓ-Chalkogenid eine höhere elektrische Leitfähigkeit hat, die durch Dotieren mit B steuerbar ist; wobei der Prozess Folgendes umfasst:
Bereitstellen der Zusammensetzungen A-Y₁ und B-Y₂ jeweils in der Dampfphase, wobei Y₁ and Y₂ dieselben oder unterschiedliche von Chlor, Brom oder Iod ausgewählte Halogene sind; und
Zusammenströmenlassen der Dämpfe A-Y₁ und B-Y₂ mit einem Reduktionsmittel, das Formiergas mit sich trägt, in eine Reaktionskammer, wo diese auf einen in die entgegengesetzte Richtung fließenden Strom eines Chalkogenid tragenden Reaktionsgases treffen, wodurch eine Reduktion der Metalle oder Übergangsmetalle A und B herbeigeführt wird, gefolgt von einer Reaktion mit dem das Chalkogenid tragenden Reaktionsgases, was in der Bildung der Nanopartikel resultiert.

7. Prozess nach Anspruch 6, wobei das Bereitstellen der Zusammensetzungen A-Y₁ und B-Y₂ in der Dampfphase eins von Folgendem umfasst: Verdampfen der Zusammensetzungen A-Y₁ und B-Y₂ in einer Kammer, die von der Reaktionskammer getrennt ist; oder Verdampfen der Zusammensetzungen A-Y₁ und B-Y₂ in zwei Kammern, die von der Reaktionskammer getrennt sind.

## Revendications

1. Nanoparticules inorganiques de type fullerène (IF) de formule A₁₋ₓ-Bₓ-chalcogénure, dans lesquelles B est incorporé au sein du A₁₋ₓ-chalcogénure, A étant un métal ou métal de transition ou un alliage de métaux et/ou de métaux de transition, B étant un métal ou un métal de transition, et x étant 0,001<x<0,01 ; à condition que A≠B, dans lesquelles A-chalcogénure et B-chalcogénure cristallisent dans une forme de réseau cristallin différente, dans lesquelles ledit atome de métal B remplace ledit métal A dans le réseau original, dans lesquelles A inclut au moins l'un parmi Mo, W, Re, Ti, Zr, Hf, Nb, Ta, In, Ga, WMo et TiW, dans lesquelles B est choisi parmi, Nb, Ta, W, Mo, Sc, Y, La, Hf, Ir, Mn, Re, V, Au, Rh, Pd, Cr, Co, Fe et Ni, et dans lesquelles le A₁₋ₓ-chalcogénure est un semi-conducteur d'une certaine conductivité électrique et la nanoparticule IF de formule A₁₋ₓ-Bₓ-chalcogénure a une conductivité électrique plus élevée qui peut être maîtrisée par dopage avec B.

2. Nanoparticules IF selon la revendication 1, dans lesquelles ledit chalcogénure est choisi parmi S, Se et Te.

3. Nanoparticules IF selon la revendication 1, dans lesquelles des atomes de métal ou de métal de transition B étant incorporés au sein de l'A₁₋ₓ-chalcogénure sont dopés uniformément au sein dudit A₁₋ₓ-chalcogénure.

4. Nanoparticules IF selon la revendication 1, ayant au moins l'une des configurations suivantes : étant des nanoparticules présentant des facettes nettes ; comprenant une dispersion continue d'atomes des composés A et B en alternance aléatoire au sein de chaque couche ; et comprenant des atomes des composés A et B incorporés en alternance dans le réseau d'A₁₋ₓ-chalcogénure.

5. Nanoparticules IF selon la revendication 1, dans lesquelles lesdites nanoparticules sont MoS₂ ou WS₂ dopé par Nb ou Re.

6. Procédé pour la fabrication de nanoparticules de type fullerène (IF) de formule A₁₋ₓ Bₓ-chalcogénure dans lequel A est au moins l'un parmi Mo, W, Re, Ti, Zr, Hf, Nb, Ta, In, Ga, WMo et TiW ; B est choisi parmi Nb, Ta, W, Mo, Sc, Y, La, Hf, Ir, Mn, Re, V, Au, Rh, Pd, Cr, Co, Fe et Ni ; et dans lequel 0,001<x<0,01, à condition qu'au sein de ladite nanoparticule A≠B ; et ayant B et B-chalcogénure incorporés au sein de l'A₁₋ₓ-chalcogénure, dans lequel ledit atome de métal B remplace ledit métal A dans le réseau original, et dans lequel A-chalcogénure et B-chalcogénure cristallisent dans une forme de réseau cristallin différente ; et dans lequel l'A₁₋ₓ-chalcogénure est un semi-conducteur d'une certaine conductivité électrique et la nanoparticule IF de formule A₁₋ₓ-Bₓ-chalcogénure a une conductivité électrique plus élevée qui peut être maîtrisée par dopage avec B ; le procédé comprenant :
la fourniture de compositions A-Y₁ et B-Y₂ chacune en phase vapeur, Y₁ et Y₂ étant des halogènes identiques ou différents choisis parmi chlore, brome ou iode ; et
l'écoulement desdites vapeurs A-Y₁ et B-Y₂ conjointement avec un gaz de formage portant un agent réducteur dans une chambre de réaction où elles se rencontrent dans un écoulement de direction opposée d'un gaz de réaction portant du chalcogénure, ce qui provoque la survenue d'une réduction des métaux ou métaux de transition A et B, suivie par une réaction avec le gaz de réaction portant du chalcogénure, résultant en la formation desdites nanoparticules.

7. Procédé selon la revendication 6, dans lequel la fourniture de compositions A-Y₁ et B-Y₂ en phase vapeur comprend l'une des suivantes : une évaporation des compositions A-Y₁ et B-Y₂ dans une chambre indépendant de ladite chambre de réaction ; ou une évaporation des compositions A-Y₁ et B-Y₂ dans deux chambres, respectivement, indépendantes de ladite chambre de réaction.
